# EUROPÄISCHE PATENTSCHRIFT

(11) **EP 3 110 642 B1**
(45) Veröffentlichungstag und Bekanntmachung des Hinweises auf die Patenterteilung: **17.10.2018**
(21) Anmeldenummer: 15702748.3
(22) Anmeldetag: 03.02.2015
(51) Int. Cl.: B60J 3/04, B60J 3/02, G02B 5/20

(54) **SONNENBLENDE**
SUN SHIELD
PARE-SOLEIL

(30) Priorität: 25.02.2014 DE 102014203319; 25.02.2014 DE 102014203320; 25.02.2014 DE 102014203321
(43) Veröffentlichungstag der Anmeldung: 04.01.2017
(73) Patentinhaber: Bayerische Motoren Werke Aktiengesellschaft, 80809 München (DE)
(72) Erfinder: HUBER, Wolfgang-Andreas, 82256 Fuerstenfeldbruck (DE)
(86) Internationale Anmeldenummer: PCT/EP2015/052140
(87) Internationale Veröffentlichungsnummer: WO 2015/128158

(56) Entgegenhaltungen:
- GB-A- 2 161 983
- GB-A- 2 445 365
- US-A1- 2003 169 213
- US-A1- 2012 126 099

## Beschreibung

Die Erfindung betrifft ein Verfahren und eine entsprechende Vorrichtung zur Bereitstellung eines Blendschutzes in einem Fahrzeug. Die in diesem Dokument beschriebenen Verfahren und Vorrichtungen sind insbesondere für Straßenfahrzeuge, Schienenfahrzeuge, Luftfahrzeuge und/oder Wasserfahrzeuge anwendbar.

Fahrzeuge (insbesondere Landfahrzeuge wie Personenkraftwagen oder Lastkraftwagen) weisen typischerweise Vorrichtungen auf, um eine Einschränkung der Sicht eines Fahrzeug-Fahrers durch Blendung zu reduzieren. Der Fahrer eines Fahrzeugs kann beispielsweise nachts durch die Scheinwerfer eines entgegenkommenden Fahrzeugs geblendet werden. In diesem Zusammenhang sind in Fahrzeugen Maßnahmen wie Abblendlicht, Auslegung eines Lichtteppichs, blendfreies Fernlicht, etc. vorgesehen, um die Blendwirkung der Schweinwerfer der Fahrzeuge zu reduzieren. Für die Reduzierung der Blendung eines Fahrers bei Tag, weisen Fahrzeuge typischerweise Sonnenblenden zum Schutz gegen die Blendung durch die Sonne bzw. durch einen gleißenden Himmel auf. Desweiteren kann ein sogenannter Grünkeil im oberen Teil der Windschutzscheibe eines Fahrzeugs die Blendwirkung des Umgebungslichts reduzieren.

Darüber hinaus wurden Verfahren und Vorrichtungen beschrieben, die anhand von lokal abdunkelbaren transparenten Flächen (z.B. in Form von einer Beschichtung der Windschutzscheibe eines Fahrzeugs) eine adaptive Sonnenblende bereitstellen. Dabei wird anhand von Kameras die Position der Augen eines Fahrers und die Position der Blendquelle bestimmt, und die abdunkelbare Fläche derart abgedunkelt, dass durch die Blendquelle ein Schatten auf die Augen des Fahrers geworfen wird. So kann die Blendwirkung der Blendquelle reduziert werden, ohne das Sichtfeld des Fahrers signifikant einzuschränken.

Das Dokument GB 2 445 365 A offenbart eine derartige Vorrichtung.

Die Verwendung von lokal abdunkelbaren Flächen, insbesondere von Flächen, welche auf der Windschutzscheibe eines Fahrzeugs angebracht sind, hat den Nachteil, dass derartige Flächen auch im transparenten Zustand eine reduzierte Lichtdurchlässigkeit aufweisen. Dies kann dazu führen, dass ggf. gesetzliche Vorschriften bzgl. der Transparenz von Windschutzscheiben nicht eingehalten werden können. Desweiteren kann durch abdunkelbare Flächen auf einer Windschutzscheibe die Blendwirkung einer seitlich auf das Fahrzeug einfallenden Blendquelle nicht reduziert werden.
Darüber hinaus führen die beschriebenen Verfahren und Vorrichtungen zur adaptiven Reduzierung einer Blendquelle mittels abdunkelbarer Flächen zu sichtbaren Artefakten, die von einem Fahrer als störend wahrgenommen werden können.
Das vorliegende Dokument befasst sich mit der technischen Aufgabe, eine Vorrichtung zur Reduzierung der Blendung eines Fahrers bereitzustellen, durch die die Lichtdurchlässigkeit der Scheiben eines Fahrzeugs (insbesondere der Windschutzscheibe) nicht beeinträchtigt wird. Desweiteren befasst sich das vorliegende Dokument mit der technischen Aufgabe, eine Vorrichtung zur Reduzierung der Blendung eines Fahrers bereitzustellen, durch die auch seitlich auf das Fahrzeug einfallendes Licht ausgeblendet werden kann. Darüber hinaus befasst sich das vorliegende Dokument mit der technischen Aufgabe, eine adaptive Vorrichtung zur Reduzierung der Blendung eines Fahrers bereitzustellen, welche keine sichtbaren Artefakte erzeugt und/oder welche in präziser Weise den Bewegungen eines Fahrers nachgeführt werden kann.
Zumindest eine der genannten Aufgaben wird jeweils durch die in den unabhängigen Ansprüchen angegebenen Merkmale der Erfindung gelöst.

Vorteilhafte Ausführungsformen der Erfindung werden u.a. in den abhängigen Ansprüchen beschrieben.

Gemäß einem ersten Aspekt der Erfindung ist eine Blendschutzvorrichtung eingerichtet, selektiv Licht von einer Blendquelle zumindest teilweise für ein Auge eines Betrachters zu blockieren, wobei die Blendschutzvorrichtung mindestens eine erste lichtdurchlässige Schicht mit einer Vielzahl von Elementen umfasst. Die Lichtdurchlässigkeit der Vielzahl von Elementen ist separat veränderbar. Die Elemente der Vielzahl von Elementen weisen jeweils einen Betrachtungsrichtungsbereich auf. Eine Reduzierung der Lichtdurchlässigkeit eines Elements wird bei Betrachtung mit einem Auge des Betrachters aus einer Richtung innerhalb des Betrachtungsrichtungsbereichs stärker wahrgenommen als bei Betrachtung aus einer Richtung außerhalb des Betrachtungsrichtungsbereichs. Die Blendschutzvorrichtung ist weiterhin eingerichtet, ein erstes Element aus der Vielzahl von Elementen der ersten Schicht auszuwählen, so dass
- das erste Element auf einer Licht-Trajektorie zwischen der Blendquelle und einem ersten Auge des Betrachters liegt,
- die Licht-Trajektorie zwischen der Blendquelle und dem ersten Auge innerhalb des Betrachtungsrichtungsbereichs des ersten Elements liegt, und
- eine Licht-Trajektorie zwischen der Blendquelle und einem zweiten Auge des Betrachters außerhalb des Betrachtungsrichtungsbereichs des ersten Elements liegt.

Bei der beschriebenen Blendschutzvorrichtung kann insbesondere das von der Blendquelle kommende Licht so ausgeblendet oder abgedunkelt werden, dass das Umfeld der Blendquelle weiterhin durch die Blendschutzvorrichtung eingesehen werden kann. Mit anderen Worten, das von der Blendquelle kommende Licht kann punktuell ausgeblendet werden. Die Blendschutzvorrichtung kann z.B. auf einer Scheibe eines Fahrzeugs (z.B. auf einer Frontscheibe oder Windschutzscheibe) angeordnet sein. Alternativ oder ergänzend kann die Blendschutzvorrichtung auf einer beweglichen Blende (ähnlich einer heutigen Sonnenblende) angeordnet sein. Die Blendschutzvorrichtung (insbesondere eine abdunkelbare Fläche der Blendschutzvorrichtung) weist typischerweise eine flächenmäßige Ausbreitung mit einer bestimmten Breite (horizontal) und einer bestimmten Tiefe (vertikal) auf, um Blendquellen an verschiedenen Positionen ausblenden zu können.

Die Blendschutzvorrichtung umfasst mindestens eine erste lichtdurchlässige Schicht (auch als lichtdurchlässiges Display bezeichnet) mit einer Vielzahl von Elementen. Eine beispielhaftes Schicht kann ein LC (Liquid Crystal) Display umfassen. Die Lichtdurchlässigkeit der Vielzahl von Elementen kann separat und/oder unabhängig voneinander veränderbar sein. Insbesondere kann die Vielzahl von Elementen eine Matrix von einzeln "abdunkelbaren" Elementen umfassen.

Die Elemente der Vielzahl von Elementen weisen jeweils einen Betrachtungsrichtungsbereich auf. Der Betrachtungsrichtungsbereich ist typischerweise begrenzt. Beispielhafte Betrachtungsrichtungsbereiche umfassen einen Bereich von 90° Raumwinkel oder weniger, oder 135° Raumwinkel oder weniger. Ein begrenzter Betrachtungsrichtungsbereich bedeutet, dass eine Reduzierung der Lichtdurchlässigkeit eines Elements bei Betrachtung mit einem Auge des Betrachters aus einer Richtung innerhalb des Betrachtungsrichtungsbereichs stärker wahrgenommen wird als bei Betrachtung aus einer Richtung außerhalb des Betrachtungsrichtungsbereichs. Insbesondere kann eine Abdunkelung eines Elements nur dann sichtbar sein, wenn das Element aus einer Richtung innerhalb des Betrachtungsrichtungsbereichs betrachtet wird. Bei Betrachtung aus einer Richtung außerhalb des Betrachtungsrichtungsbereichs kann das Element weiterhin als (ggf. maximal) lichtdurchlässig wahrgenommen werden. Die Abdunkelung des Elements kann somit bei Betrachtung aus einer Richtung außerhalb des Betrachtungsrichtungsbereichs nicht sichtbar sein.

Die Blendschutzvorrichtung kann eingerichtet sein, ein erstes Element (oder mehrere Elemente) aus der Vielzahl von Elementen der ersten Schicht auszuwählen. Das oder die ausgewählten Elemente können dann abgedunkelt werden (d.h. die Lichtdurchlässigkeit kann reduziert werden). Dadurch kann das Licht einer Blendquelle zumindest teilweise blockiert werden.

Das erste Element kann insbesondere derart ausgewählt werden, dass das erste Element auf einer Licht-Trajektorie zwischen der Blendquelle und einem ersten Auge des Betrachters liegt und dass die Licht-Trajektorie zwischen der Blendquelle und dem ersten Auge innerhalb des Betrachtungsrichtungsbereichs des ersten Elements liegt. Dadurch wird erreicht, dass das Licht der Blendquelle für das erste Auge zumindest teilweise ausgeblendet werden kann.

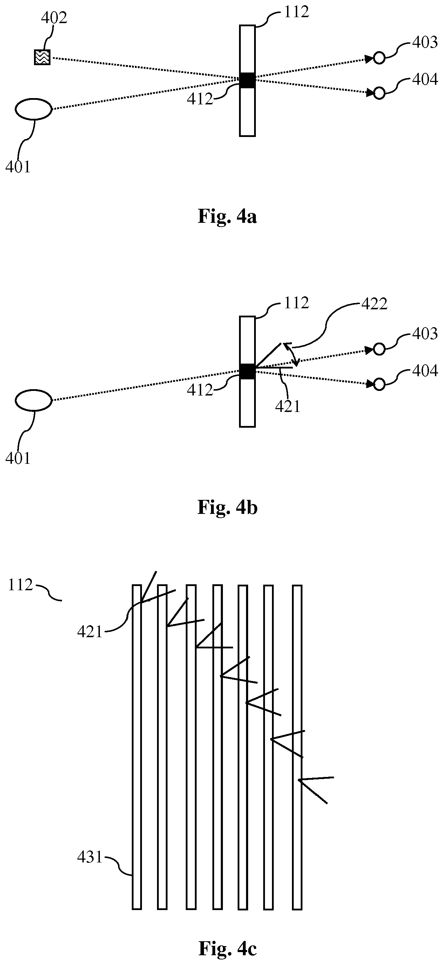

Desweiteren kann das erste Element derart ausgewählt werden, dass eine Licht-Trajektorie zwischen der Blendquelle und einem zweiten Auge des Betrachters außerhalb des Betrachtungsrichtungsbereichs des ersten Elements liegt. Dadurch wird gewährleistet, dass eine Abdunkelung (d.h. eine Reduzierung der Lichtdurchlässigkeit) des ersten Elements nicht von dem zweiten Auge als "Phantom-Spot" wahrgenommen wird. Als Phantom-Spot kann ein Punkt oder ein Fleck oder eine örtlich begrenzte Fläche bezeichnet werden, der oder die von einem Auge aus gesehen keine Blendquelle verdeckt und somit als störendes Artefakt wahrgenommen wird. Phantom-Spots haben typischerweise die Eigenschaft, dass diese als "halbtransparent" wahrgenommen werden, da das dahinterliegende Objekt nur für ein Auge verdeckt wird, mit dem anderen jedoch ungehindert gesehen werden kann. Die Entstehung eines Phantom-Spots ist z.B. in Fig. 4a veranschaulicht.

Die Verwendung einer solchen Blendschutzvorrichtung ermöglicht es somit, einen Blendschutz für das erste Auge bereitzustellen, ohne dabei sichtbare Artefakte zu generieren. Bei dem ersten Auge kann es sich um das rechte Auge und bei dem zweiten Auge um das linke Auge des Betrachters handeln (oder umgekehrt).

Die Blendschutzvorrichtung kann eine zweite lichtdurchlässige Schicht mit einer weiteren Vielzahl von Elementen umfassen. Die Blendschutzvorrichtung kann eingerichtet sein, ein zweites Element (oder mehrere Elemente) aus der Vielzahl von Elementen der zweiten Schicht auszuwählen und ggf. abzudunkeln. Das zweite Element kann derart ausgewählt werden, dass das zweite Element auf einer Licht-Trajektorie zwischen der Blendquelle und dem zweiten Auge des Betrachters liegt, und dass die Licht-Trajektorie zwischen der Blendquelle und dem zweiten Auge innerhalb des Betrachtungsrichtungsbereichs des zweiten Elements liegt. Somit kann durch eine Abdunkelung des zweiten Elements die Blendquelle für das zweite Auge ausgeblendet werden. Desweiteren kann das zweite Element derart ausgewählt werden, dass eine Licht-Trajektorie zwischen der Blendquelle und dem ersten Auge des Betrachters außerhalb des Betrachtungsrichtungsbereichs des zweiten Elements liegt. Die Abdunkelung des zweiten Elements ist somit für das erste Auge nicht sichtbar, so dass durch die Abdunkelung keine sichtbaren Artefakte entstehen.

Somit kann durch die Verwendung von einer ersten Schicht für das erste Auge und einer zweiten Schicht für das zweite Auge ein Blendschutz für beide Augen des Betrachters (z.B. des Fahrers eines Fahrzeugs) bereitgestellt werden, ohne dass dabei sichtbare Artefakte (insbesondere Phantom-Spots) entstehen.

Ein Betrachtungsrichtungsbereich kann eine Richtungsbereichsgrenze oder eine sogenannte Abrisskante aufweisen. Durch die Richtungsbereichsgrenze wird die Begrenzung des Betrachtungsrichtungsbereichs definiert, so dass eine Betrachtungsrichtung auf einer Seite der Richtungsbereichsgrenze innerhalb des Betrachtungsrichtungsbereichs liegt und so dass eine Betrachtungsrichtung auf der anderen Seite der Richtungsbereichsgrenze außerhalb des Betrachtungsrichtungsbereichs liegt. Die Richtungsbereichsgrenzen der Betrachtungsrichtungsbereiche der zweiten Schicht können zu den Richtungsbereichsgrenzen der Betrachtungsrichtungsbereiche der ersten Schicht spiegelsymmetrisch zueinander sein. Sie Symmetrielinie kann auf einer Mittellinie senkrecht zu einer Verbindungslinie zwischen dem ersten und zweiten Auge des Betrachters liegen. Durch eine derartige Anordnung kann sichergestellt werden, dass die beiden Schichten die Blendquelle in verlässlicher Weise für das jeweilige Auge ausblenden können.

Die Blendschutzvorrichtung kann eine Vielzahl von Schichten mit jeweils einer Vielzahl von Elementen umfassen. Die Betrachtungsrichtungsbereiche der Elemente von zwei unterschiedlichen Schichten der Vielzahl von lichtdurchlässigen Schichten können unterschiedlich sein. Die Blendschutzvorrichtung kann eingerichtet sein, in Abhängigkeit von den Betrachtungsrichtungsbereichen die erste Schicht aus der Vielzahl von Schichten auszuwählen. Mit anderen Worten, um für verschieden positionierte Blendquellen Elemente bereitzustellen, die einen Betrachtungsrichtungsbereich aufweisen, durch den die Blendquelle für das erste Auge ausgeblendet werden kann, ohne einen Artefakt für das zweite Auge zu erzeugen, können mehrere Schichten mit Elementen verwendet werden, die unterschiedliche Betrachtungsrichtungsbereiche aufweisen. Je nach Position der Blendquelle kann dann eine andere Schicht ausgewählt werden, aus der dann ein oder mehrere Elemente abgedunkelt werden können.

Alternativ oder ergänzend können sich die Betrachtungsrichtungsbereiche der Elemente entlang einer Flächenachse (insbesondere entlang der Breitenachse) der ersten lichtdurchlässigen Schicht verändern. Mit anderen Worten, die Elemente einer Schicht können unterschiedliche Betrachtungsrichtungsbereiche aufweisen. Durch die Verwendung von Elementen mit unterschiedlichen Betrachtungsrichtungsbereichen kann durch die erste Schicht ein Artefakt-freier Blendschutz für das erste Auge für unterschiedlich positionierte Blendquellen bereitgestellt werden. Dies ermöglicht es insbesondere, die Lichtdurchlässigkeit der Blendschutzvorrichtung (insbesondere der lichtdurchlässigen und abdunkelbaren Fläche der Blendschutzvorrichtung) zu erhöhen, da der Blendschutz durch eine einzige Schicht (pro Auge) bereitgestellt werden kann.

Die Blendschutzvorrichtung kann somit ein oder mehrere Schichten mit (lichtdurchlässigen und abdunkelbaren) Elementen umfassen, die eingerichtet sind, durch Reduzierung der Lichtdurchlässigkeit das Licht von ein oder mehreren Blendquellen für das erste Auge zumindest teilweise zu blockieren, so dass die reduzierte Lichtdurchlässigkeit für das zweite Auge nicht substantiell wahrnehmbar ist. Desweiteren kann die Blendschutzvorrichtung ein oder mehrere Schichten mit Elementen umfassen, die eingerichtet sind, durch Reduzierung der Lichtdurchlässigkeit das Licht von den ein oder mehreren Blendquellen für das zweite Auge zumindest teilweise zu blockieren, so dass die reduzierte Lichtdurchlässigkeit für das erste Auge nicht substantiell wahrnehmbar ist. So kann ein Artefakt-freier Blendschutz für beide Augen des Betrachters bereitgestellt werden.

Desweiteren kann die Blendschutzvorrichtung eine Abdunkelungs-Schicht mit Elementen umfassen, die eingerichtet sind, durch Reduzierung der Lichtdurchlässigkeit das Licht von den ein oder mehreren Blendquellen für das erste Auge und für das zweite Auge zumindest teilweise zu blockieren. Dies kann insbesondere dazu verwendet werden, einen kompletten Bereich des Sichtfelds des Betrachters zu entblenden (z.B. zur Bereitstellung des Effekts eines "Grünkeils" oder einer vollständig abgedunkelten Sonnenblende).

Desweiteren kann die Abdunkelungs-Schicht dazu verwendet werden, einen abgedunkelten (typischerweise schwarzen) Hintergrund für ein Display zur Darstellung von Informationen bereitzustellen. In diesem Zusammenhang kann die Blendschutzvorrichtung ein oder mehrere selbst-leuchtende Displayschichten umfassen. Die Displayschichten können auf einer (einem Fahrer oder Insassen zugewandten) Rückseite der Blendenvorrichtung angeordnet sein. Die Blendschutzvorrichtung kann eingerichtet sein, mittels der ein oder mehreren selbst-leuchtenden Displayschichten Informationen auf der Abdunkelungs-Schicht darzustellen. So kann die Blendenvorrichtung in effizienter Weise (auch) als Display zur Darstellung von Informationen verwendet werden.

Gemäß einem zweiten Aspekt der Erfindung, der in Kombination mit den Ausführungsbeispielsen zu dem oben beschriebenen Aspekt der Erfindung gesehen werden kann, wird eine Blendschutzvorrichtung beschrieben, welche eingerichtet ist, selektiv Licht von einer Blendquelle zumindest teilweise für ein Auge eines Betrachters zu blockieren. Die in diesem Dokument beschriebenen Merkmale für Blendschutzvorrichtungen und/oder für abdunkelbare Flächen / Displays sind auch auf diese Blendschutzvorrichtung anwendbar. Die Blendschutzvorrichtung umfasst eine Vielzahl von lichtdurchlässigen Schichten mit jeweils einer Vielzahl von Elementen. Die Lichtdurchlässigkeit der Vielzahl von Elementen ist separat veränderbar. Die Elemente der Vielzahl von Elementen weisen jeweils einen Betrachtungsrichtungsbereich auf, wobei eine Reduzierung der Lichtdurchlässigkeit eines Elements bei Betrachtung mit einem Auge des Betrachters aus einer Richtung innerhalb des Betrachtungsrichtungsbereichs stärker wahrgenommen wird als bei Betrachtung aus einer Richtung außerhalb des Betrachtungsrichtungsbereichs. Die Betrachtungsrichtungsbereiche der Elemente von zwei unterschiedlichen Schichten der Vielzahl von lichtdurchlässigen Schichten können unterschiedlich sein. Dadurch kann gewährleistet werden, dass das Licht von unterschiedlich positionierten Blendquellen Artefakt-frei für zumindest ein Auge des Betrachters ausgeblendet werden kann.

Die Blendschutzvorrichtung kann eingerichtet sein, in Abhängigkeit von einer Position der Blendquelle eine erste Schicht der Vielzahl von lichtdurchlässigen Schichten auszuwählen, so dass sich die Blendquelle für ein erstes Auge des Betrachters innerhalb des Betrachtungsrichtungsbereichs von zumindest einem Element der Vielzahl von Elementen der ersten Schicht befindet, und so dass sich die Blendquelle für ein zweites Auge des Betrachters außerhalb des Betrachtungsrichtungsbereichs des zumindest einen Elements der Vielzahl von Elementen der ersten Schicht befindet. Dies ermöglicht die Artefakt-freie Ausblendung einer Blendquelle für das erste Auge.

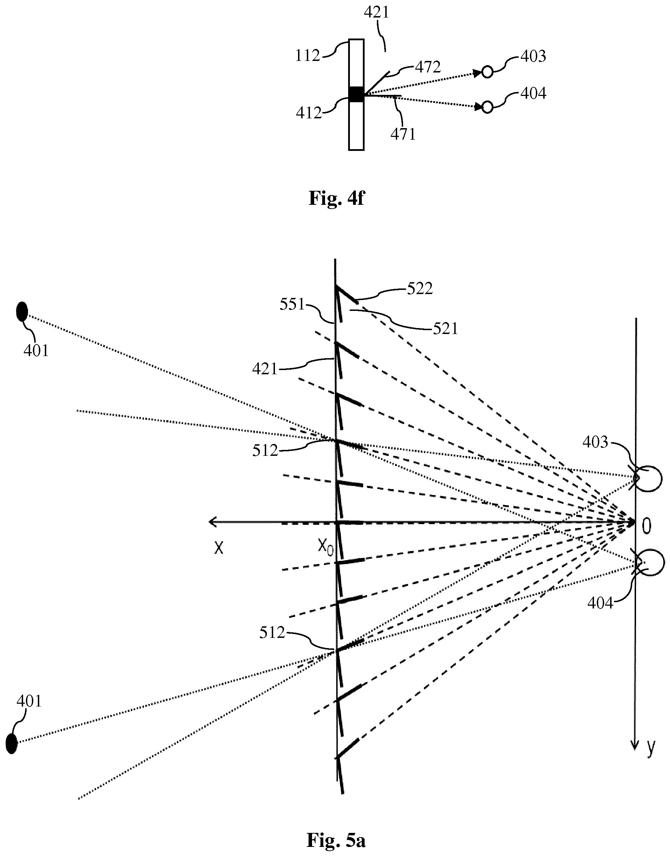

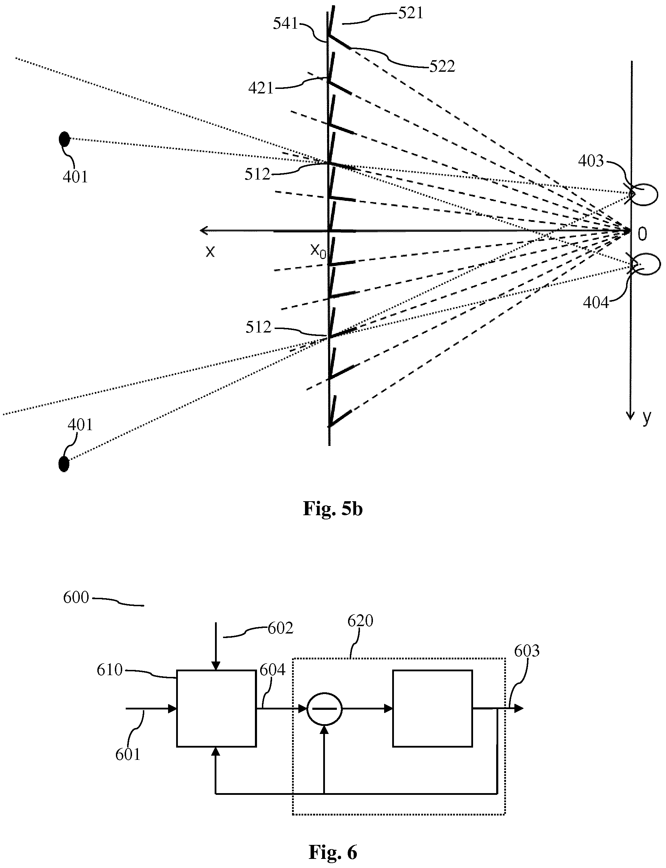

Gemäß einem dritten Aspekt der Erfindung, in Kombination mit den oben beschriebenen Ausführungsformen des ersten und/oder des zweiten Aspekts der Erfindung, wird eine Blendschutzvorrichtung beschrieben, welche eingerichtet ist, selektiv Licht von einer Blendquelle zumindest teilweise für ein Auge eines Betrachters zu blockieren. Die in diesem Dokument beschriebenen Merkmale für Blendschutzvorrichtungen und/oder für abdunkelbare Flächen / Displays sind auch auf diese Blendschutzvorrichtung anwendbar. Die Blendschutzvorrichtung umfasst mindestens eine erste lichtdurchlässige Schicht mit einer Vielzahl von Elementen. Die Lichtdurchlässigkeit der Vielzahl von Elementen kann separat veränderbar sein. Die Elemente der Vielzahl von Elementen weisen jeweils einen insbesondere begrenzten Betrachtungsrichtungsbereich auf, wobei eine Reduzierung der Lichtdurchlässigkeit eines Elements bei Betrachtung mit einem Auge des Betrachters aus einer Richtung innerhalb des Betrachtungsrichtungsbereichs stärker wahrgenommen wird als bei Betrachtung aus einer Richtung außerhalb des Betrachtungsrichtungsbereichs. Die Betrachtungsrichtungsbereiche der Elemente können sich entlang einer Flächenachse der ersten lichtdurchlässigen Schicht verändern. Dadurch kann gewährleistet werden, dass das Licht von unterschiedlich positionierten Blendquellen Artefakt-frei für zumindest ein Auge des Betrachters ausgeblendet werden kann.
Wie bereits oben dargelegt, kann ein Betrachtungsrichtungsbereich eine Richtungsbereichsgrenze aufweisen. Die Richtungsbereichsgrenzen der Betrachtungsrichtungsbereiche der Elemente entlang der Flächenachse der ersten lichtdurchlässigen Schicht können auf einen gemeinsamen Punkt auf einer Querachse senkrecht zur Flächenachse der ersten lichtdurchlässigen Schicht gerichtet sein. Der gemeinsame Punkt kann insbesondere einem Mittelpunkt auf einer Achse zwischen dem ersten Auge und dem zweiten Auge des Betrachters entsprechen. Durch eine derartige Anordnung von Elementen und deren Betrachtungsrichtungsbereichen kann gewährleistet werden, dass Blendquellen entlang der gesamten Flächenachse Artefakt-frei ausgeblendet werden können. Die Blendschutzvorrichtung kann eingerichtet sein, einen Fokalpunkt zu ermitteln. Der Fokalpunkt kann dem Mittelpunkt auf der Achse zwischen dem ersten Auge und dem zweiten Auge des Betrachters entsprechen. Die Richtungsbereichsgrenzen der Betrachtungsrichtungsbereiche der Elemente entlang der Flächenachse der ersten lichtdurchlässigen Schicht können derart verändert oder angepasst werden, dass die Richtungsbereichsgrenzen auf den Fokalpunkt gerichtet sind. Insbesondere kann die Blendschutzvorrichtung eingerichtet sein, mittels eines Regelkreises die Richtungsbereichsgrenzen in Bezug auf einen sich verändernden Fokalpunkt zu regeln. So kann gewährleistet werden, dass auch bei wechselnden Kopfpositionen des Betrachters, Blendquellen Artefakt-frei ausgeblendet werden können.
Die Regelung in Bezug auf einen sich verändernden Fokalpunkt kann für eine Blendschutzvorrichtung mit ein oder mehreren lichtdurchlässigen Schichten erfolgen. Desweiteren kann die Regelung für eine lichtdurchlässige Schicht mit (entlang der Schicht) gleichmäßigen Betrachtungsrichtungsbereichen und/oder mit (entlang der Schicht) unterschiedlichen Betrachtungsrichtungsbereichen erfolgen. Die Betrachtungsrichtungsbereiche können derart geregelt werden, dass eine der Richtungsbereichsgrenzen auf den Fokalpunkt (z.B. auf das erste oder auf das zweite Auge oder auf einen Mittelpunkt zwischen dem ersten und zweiten Auge) zeigt (wie z.B. in Fig. 5a und Fig. 5b veranschaulicht).

Gemäß einem vierten Aspekt der Erfindung, in Kombination mit den oben beschriebenen Ausführungsformen des ersten, zweiten und/oder des dritten Aspekts der Erfindung, ist eine Blendschutzvorrichtung für ein Fahrzeug vorgesehen, welche eingerichtet ist, selektiv Licht von einer Blendquelle zumindest teilweise für ein Auge eines Betrachters zu blockieren, wobei die Blendschutzvorrichtung mindestens eine lichtdurchlässige Schicht mit einer Vielzahl von Elementen umfasst und wobei die Lichtdurchlässigkeit der Vielzahl von Elementen separat veränderbar ist. Die Blendschutzvorrichtung ist dabei eingerichtet,
- Daten bzgl. einer Beschleunigung des Fahrzeugs zu ermitteln;
- unter Berücksichtigung der Daten bzgl. der Beschleunigung des Fahrzeugs, eine Position des Auges des Betrachters zu prädizieren;
- ein Element aus der Vielzahl von Elementen der lichtdurchlässigen Schicht auszuwählen, so dass das Element auf einer Licht-Trajektorie zwischen der Blendquelle und der prädizierten Position des Auges des Betrachters liegt; und
- die Lichtdurchlässigkeit des ausgewählten Elements zu reduzieren.

Gemäß diesem Aspekt kann insbesondere das von der Blendquelle kommende Licht so ausgeblendet oder abgedunkelt werden, dass das Umfeld der Blendquelle weiterhin durch die Blendschutzvorrichtung eingesehen werden kann. Mit anderen Worten, das von der Blendquelle kommende Licht kann punktuell ausgeblendet werden. Die Blendschutzvorrichtung kann z.B. auf einer Scheibe eines Fahrzeugs (z.B. auf einer Frontscheibe oder Windschutzscheibe) angeordnet sein. Alternativ oder ergänzend kann die Blendschutzvorrichtung auf einer beweglichen Blende (ähnlich einer heutigen Sonnenblende) angeordnet sein. Die Blendschutzvorrichtung (insbesondere eine abdunkelbare Fläche der Blendschutzvorrichtung) weist typischerweise eine flächenmäßige Ausbreitung mit einer bestimmten Breite (horizontal) und einer bestimmten Tiefe (vertikal) auf, um Blendquellen an verschiedenen Positionen ausblenden zu können.

Die jeweilige Blendschutzvorrichtung umfasst insbesondere mindestens eine lichtdurchlässige Schicht (auch als lichtdurchlässiges Display bezeichnet) mit einer Vielzahl von Elementen. Eine beispielhaftes Schicht kann ein LC (Liquid Crystal) Display umfassen. Die Lichtdurchlässigkeit der Vielzahl von Elementen kann separat und/oder unabhängig voneinander veränderbar sein. Insbesondere kann die Vielzahl von Elementen eine Matrix von einzeln "abdunkelbaren" Elementen umfassen.

Die Blendschutzvorrichtung kann insbesondere eingerichtet sein, Daten bzgl. einer Beschleunigung bzw. Drehung des Fahrzeugs zu ermitteln. Diese Daten können als Bewegungsdaten bezeichnet werden. Die Bewegungsdaten können z.B. mit einem Gyrosensor und/oder Beschleunigungssensor erfasst werden. Dieser Sensor wird im Folgenden als "Gyro-/ Beschleunigungssensor" bezeichnet. Der Sensor zur Erfassung der Beschleunigung des Fahrzeugs kann sich an oder in der Blendschutzvorrichtung befinden. Insbesondere kann der Sensor starr mit der lichtdurchlässigen Schicht gekoppelt sein.

Die Blendschutzvorrichtung kann weiter eingerichtet sein, unter Berücksichtigung der Daten bzgl. der Beschleunigung des Fahrzeugs, eine Position des Auges des Betrachters zu prädizieren. Dazu kann ggf. eine Übertragungsfunktion berücksichtigt werden, wobei die Übertragungsfunktion einen Zusammenhang zwischen einer Beschleunigung des Fahrzeugs und einer daraus resultierenden Bewegung des Auges des Betrachters wiedergibt. Die Position des Auges des Betrachters kann somit auch unter Berücksichtigung der Übertragungsfunktion prädiziert werden. Die Beschleunigung des Fahrzeugs kann insbesondere eine Vertikalbeschleunigung des Fahrzeugs (vertikal zu einer Fahrbahn) und/oder eine Querbeschleunigung des Fahrzeugs (quer zur Fahrtrichtung) umfassen.

Die Blendschutzvorrichtung kann weiter eingerichtet sein, ein Element aus der Vielzahl von Elementen der lichtdurchlässigen Schicht auszuwählen, so dass das Element auf einer Licht-Trajektorie zwischen der Blendquelle und der prädizierten Position des Auges des Betrachters liegt. Desweiteren ist die Blendschutzvorrichtung eingerichtet, die Lichtdurchlässigkeit des ausgewählten Elements zu reduzieren. Somit kann mittels der Blendschutzvorrichtung eine (ggf. punktuelle) Blendquelle selektiv ausgeblendet werden, und weiterhin ein möglichst großes Sichtfeld für den Betrachter bereitgestellt werden.

Die Blendschutzvorrichtung kann eingerichtet sein, Bilddaten von einer auf den Betrachter gerichteten Kamera zu empfangen. Eine solche Kamera wird in diesem Dokument auch als eine Rückkamera bezeichnet. Die Position des Auges des Betrachters kann auf Basis der Bilddaten bestimmt werden. Die Berücksichtigung der Beschleunigung des Fahrzeugs bei der "vorausschauenden" Bestimmung der Position des Auges des Betrachters ermöglicht es jedoch, die Position der punktuellen Abdunkelung zeitlich so zu steuern, dass die Blendquelle beim Erreichen der prädizierten Augenposition durch die Abdunkelung passgenau abgedeckt wird. Damit kann durch die Berücksichtigung der Beschleunigung des Fahrzeugs eine Regelfrequenz eines Regelkreises zur Anpassung der Position der Abdunkelung niedriger ausfallen, als bei einer reinen "Nachregelung" auf eine, durch die Rückkamera ermittelte, bereits erreichte Augenposition.

Die Blendschutzvorrichtung kann eingerichtet sein, eine Betrachter-spezifische Übertragungsfunktion zu ermitteln. Dazu kann die Übertragungsfunktion z.B. in einer Speichereinheit hinterlegt sein, auf die die Blendschutzvorrichtung zugreifen kann. Alternativ oder ergänzend kann die Blendschutzvorrichtung eingerichtet sein, in einer Trainingsphase die für den Betrachter spezifische Übertragungsfunktion zu ermitteln. Dabei können während der Trainingsphase die Bewegungen des Auges des Betrachters für eine Vielzahl von Beschleunigungen des Fahrzeugs erfasst werden. Aus den so erfassten Trainingsdaten kann dann eine Betrachter-spezifische Übertragungsfunktion bestimmt werden. Durch die Ermittlung einer Betrachter-spezifischen Übertragungsfunktion können die Prädiktionsergebnisse verbessert werden.

Die Blendschutzvorrichtung kann eingerichtet sein, mit einer vordefinierten Iterationsfrequenz, ein oder mehrere Elemente auszuwählen, die auf der Licht-Trajektorie liegen. Dazu kann ein Regelungsalgorithmus verwendet werden, durch den die ein oder mehreren Elemente der Licht-Trajektorie nachgeführt werden. Desweiteren kann die Blendschutzvorrichtung eingerichtet sein, mit der vordefinierten Iterationsfrequenz, die Lichtdurchlässigkeit eines in einer (ggf. direkt) vorhergehenden Iteration ausgewählten und in einer aktuellen Iteration nicht ausgewählten Elementes zu erhöhen. Außerdem kann die Lichtdurchlässigkeit eines in der vorhergehenden Iteration nicht ausgewählten und in der aktuellen Iteration ausgewählten Elementes reduziert werden. So kann der abgedunkelte Bereich der lichtdurchlässigen Schicht der sich verändernden Licht-Trajektorie nachgeführt werden, um einen Blendschutz bereitzustellen. Gleichzeitig wird weiterhin ein möglichst großes (transparentes) Sichtfeld für den Betrachter bereitgestellt.

Die Blendschutzvorrichtung kann insbesondere zumindest eine der folgenden weiteren Merkmale aufweisen:
- Sie kann einen Sensor umfassen, der eingerichtet ist, die Daten bzgl. der Beschleunigung des Fahrzeugs zu erfassen.
- Sie kann eingerichtet sein, eine Übertragungsfunktion zu ermitteln, wobei die Übertragungsfunktion einen Zusammenhang zwischen einer Beschleunigung des Fahrzeugs und einer daraus resultierenden Bewegung des Auges des Betrachters wiedergibt und wobei die Position des Auges des Betrachters auch unter Berücksichtigung der Übertragungsfunktion prädiziert wird.
- Sie kann eingerichtet sein, eine Betrachter-spezifische Übertragungsfunktion zu ermitteln.
- Sie kann eingerichtet sein, in einer Trainingsphase die für den Betrachter spezifische Übertragungsfunktion zu ermitteln und während der Trainingsphase die Bewegungen des Auges des Betrachters für eine Vielzahl von Beschleunigungen des Fahrzeugs zu erfassen.
- Sie kann eingerichtet sein, Bilddaten von einer auf den Betrachter gerichteten Kamera zu empfangen und die Position des Auges des Betrachters auch unter Berücksichtigung der Bilddaten zu prädizieren.
- Sie kann eingerichtet sein, mit einer vordefinierten Iterationsfrequenz - ein oder mehrere Elemente auszuwählen, die auf der Licht-Trajektorie liegen;
- die Lichtdurchlässigkeit eines in einer vorhergehenden Iteration ausgewählten und in einer aktuellen Iteration nicht ausgewählten Elementes zu erhöhen; und
- die Lichtdurchlässigkeit eines in der vorhergehenden Iteration nicht ausgewählten und in der aktuellen Iteration ausgewählten Elementes zu reduzieren.
Gemäß einem weiteren Aspekt wird ein Verfahren zur selektiven Reduzierung des Lichtes von einer Blendquelle für ein Auge eines Betrachters mittels einer Blendschutzvorrichtung für ein Fahrzeug beschrieben. Die Blendschutzvorrichtung umfasst dabei mindestens eine lichtdurchlässige Schicht mit einer Vielzahl von Elementen. Die Lichtdurchlässigkeit der Vielzahl von Elementen ist separat veränderbar ist. Das Verfahren umfasst folgende Schritte:
- Ermitteln von Daten bzgl. einer Beschleunigung des Fahrzeugs;
- Prädizieren einer Position des Auges des Betrachters unter Berücksichtigung der Daten bzgl. der Beschleunigung des Fahrzeugs;
- Auswählen eines Elements aus der Vielzahl von Elementen der lichtdurchlässigen Schicht, so dass das Element auf einer Licht-Trajektorie zwischen der Blendquelle und der prädizierten Position des Auges des Betrachters liegt; und
- Reduzieren der Lichtdurchlässigkeit des ausgewählten Elements.
Das Ermitteln der Daten bzgl. einer Beschleunigung des Fahrzeugs kann insbesondere anhand eines Gyro/- Beschleunigungssensors erfolgen.
Gemäß einem fünften Aspekt der Erfindung, in Verbindung mit einem oder mehreren der vorher genannten Aspekte und ihrer Ausführungsbeispiele, ist eine Blendschutzvorrichtung vorgesehen, welche eingerichtet ist, bewegbar im Innenraum eines Fahrzeugs angeordnet zu werden, so dass die Blendschutzvorrichtung in eine heruntergeklappte Position und in eine hochgeklappte Position gebracht werden kann, wobei die Blendschutzvorrichtung in der heruntergeklappten Position die Sicht eines Insassen des Fahrzeugs auf einen Teil einer Scheibe des Fahrzeugs bedeckt. Die Blendschutzvorrichtung umfasst dabei
- einen Trägerteil, durch den ein Basisanteil einer Blendenfläche der Blendschutzvorrichtung bereitgestellt wird; und
- einen beweglichen Teil, der beweglich in der Blendschutzvorrichtung angeordnet ist, und der eingerichtet ist, die Blendenfläche der Blendschutzvorrichtung über den Basisanteil hinaus zu vergrößern.

Diese Blendschutzvorrichtung kann auch als Blende bezeichnet werden. Die Blendschutzvorrichtung ist insbesondere eingerichtet, bewegbar im Innenraum eines Fahrzeugs angeordnet zu werden, so dass die Blendschutzvorrichtung in eine heruntergeklappte Position und in eine hochgeklappte Position gebracht werden kann. Zu diesem Zweck kann die Blendschutzvorrichtung eine Achse aufweisen, um die die Blendschutzvorrichtung bewegt werden kann. Die Blendschutzvorrichtung (insbesondere die Achse der Blendschutzvorrichtung) kann an oder in der Nähe der oberen Kante einer Front- oder Windschutzscheibe des Fahrzeugs angebracht werden.

Die Blendschutzvorrichtung kann derart im Fahrzeug angeordnet werden, dass in der heruntergeklappten Position die Sicht eines Insassen des Fahrzeugs auf einen Teil einer Scheibe (z.B. der Frontscheibe oder Windschutzscheibe) des Fahrzeugs durch eine Blendenfläche der Blendschutzvorrichtung bedeckt wird. Mit anderen Worten, die Blendenfläche kann in der heruntergeklappten Position in ein Sichtfeld oder in einen Sichtbereich des Insassen durch die Scheibe des Fahrzeugs eingreifen. Dabei kann die Blendenfläche zumindest teilweise lichtdurchlässig sein, so dass die Blendenfläche zwar die Sicht auf die Scheibe des Fahrzeugs bedeckt, der Insasse aber dennoch durch den lichtdurchlässigen Teil der Blendenfläche auf die Scheibe und somit auch auf die Umgebung des Fahrzeugs blicken kann. In der hochgeklappten Position liegt die Blendschutzvorrichtung typischerweise außerhalb des Sichtfelds des Insassen des Fahrzeugs.

Die Blendschutzvorrichtung umfasst insbesondere einen Trägerteil, durch den ein Basisanteil der Blendenfläche der Blendschutzvorrichtung bereitgestellt wird. Mit anderen Worten, durch den Trägerteil kann eine bestimmte (ggf. minimale) Ausbaustufe der Blendenfläche bereitgestellt werden. Dabei ist minimal in dem Sinne zu verstehen, dass die Funktionalität der Blendschutzvorrichtung skalierbar ist. Desweiteren umfasst die Blendschutzvorrichtung einen beweglichen Teil, der beweglich in der Blendschutzvorrichtung angeordnet ist, und der eingerichtet ist, die Blendenfläche der Blendschutzvorrichtung über den Basisanteil hinaus zu vergrößern. Mit anderen Worten, der bewegliche Teil kann dazu verwendet werden, die Blendenfläche je nach Bedarf zu vergrößern. Insbesondere kann der bewegliche Teil derart ausgelegt sein, dass im heruntergeklappten Zustand die Blendenfläche in vertikaler Richtung (z.B. senkrecht zu einer Achse der Blendschutzvorrichtung) vergrößert werden kann.

Die Bereitstellung eines beweglichen Teils hat den Vorteil, dass durch den Trägerteil eine Blendschutzvorrichtung mit einer reduzierten Blendenfläche bereitgestellt werden kann, die je nach Bedarf durch den beweglichen Teil vergrößert werden kann. Dies ist insbesondere in Cabriolet-Fahrzeugen in Hinblick auf das Strömungsverhalten der Blendschutzvorrichtung sowie für die reduzierte Verdeckung des Himmels durch die Blendschutzvorrichtung bei geöffnetem Fahrzeug-Verdeck (um einen möglichst freien Blick nach Oben zu ermöglichen) von Vorteil.

Der bewegliche Teil kann eine lichtdurchlässige Fläche aufweisen, dessen Lichtdurchlässigkeit veränderbar ist. Die lichtdurchlässige Fläche wird in diesem Dokument auch als abdunkelbare Fläche bezeichnet. Die lichtdurchlässige Fläche umfasst beispielsweise ein LC (Liquid Crystal) Display. Die lichtdurchlässige Fläche kann eine Vielzahl von Elementen (z.B. eine Matrix von Elementen) umfassen, dessen Lichtdurchlässigkeit unabhängig voneinander verändert werden kann. Dadurch wird es ermöglicht, einzelne Bereiche der lichtdurchlässigen Fläche intransparent zu machen, um gezielt Blendquellen abzudecken, und dabei den Sichtbereich des Insassen möglichst wenig zu beeinflussen.

Die Verwendung eines beweglichen Teils mit einer lichtdurchlässigen Fläche ermöglicht es, eine Blendschutzvorrichtung bereitzustellen, durch die ein möglichst großer Bereich des Sichtbereichs des Insassen (z.B. des Fahrers) abgedeckt wird. So können auch Blendquellen ausgeblendet werden, die mit einem relativ niedrigen Einfallswinkel durch die Scheibe des Fahrzeugs einfallen (z.B. die Scheinwerfer von einen entgegenkommenden Fahrzeug). Der bewegliche Teil kann jederzeit aus dem Sichtbereich des Insassen genommen werden (z.B. durch Veränderung der Position der Blendschutzvorrichtung oder durch Bewegen des beweglichen Teils), und durch die Blendschutzvorrichtung wird die Lichtdurchlässigkeit der Scheibe des Fahrzeugs nicht beeinflusst. Somit können mittels der beschriebenen Blendschutzvorrichtung mögliche gesetzliche Vorschriften bzgl. der Transparenz von Scheiben eines Fahrzeugs erfüllt werden.

Die Blendschutzvorrichtung kann einen Motor und/oder einen Mechanismus umfassen, der eingerichtet ist, den beweglichen Teil zu bewegen, um die Blendenfläche zu vergrößern oder zu verkleinern. Die Verwendung eines Motors ist vorteilhaft, da dadurch vermieden werden kann, dass der Insasse den beweglichen Teil (und eine ggf. darin befindliche lichtdurchlässige Fläche) berührt, und damit die Lichtdurchlässigkeit des beweglichen Teils beeinträchtigt.

Die Blendschutzvorrichtung (oder eine Steuereinheit) kann eingerichtet sein, eine Position der Blendschutzvorrichtung zu ermitteln. Insbesondere kann ermittelt werden, ob die Blendschutzvorrichtung in der hochgeklappten Position ist oder in Richtung der hochgeklappten Position bewegt wird, oder ob die Blendschutzvorrichtung in der heruntergeklappten Position ist oder in Richtung der heruntergeklappten Position bewegt wird. Alternativ oder ergänzend können Informationen bzgl. eines Ausklappwinkels der Blendschutzvorrichtung ermittelt werden, wobei der Ausklappwinkel z.B. in der hochgeklappten Position minimal ist und in Richtung der heruntergeklappten Position zunimmt. Die Blendschutzvorrichtung kann dann eingerichtet sein, den beweglichen Teil in Abhängigkeit von der ermittelten Position der Blendschutzvorrichtung zu bewegen. Insbesondere kann die Gesamtgröße der Blendenfläche in Abhängigkeit von der ermittelten Position der Blendschutzvorrichtung verändert werden. Dies kann vorteilhaft sein, um z.B. ein Hochklappen der Blendschutzvorrichtung zu vereinfachen (z.B. das Vorbeiführen an einem Lenkrad des Fahrzeugs) und/oder um zu ermöglichen, dass die Blendschutzvorrichtung in der heruntergeklappten Position einen vergrößerten Teil des Sichtbereichs des Insassen abdeckt.

Die Blendschutzvorrichtung kann ein oder mehrere vordefinierte Fixpositionen aufweisen. Die ein oder mehreren Fixpositionen können beispielsweise derart ausgelegt sein, dass ein Verletzungsrisiko durch die Blendschutzvorrichtung reduziert oder minimiert wird (z.B. bei einem Fahrzeug-Crash), wenn sich die Blendschutzvorrichtung in den ein oder mehreren Fixpositionen befindet. Die Blendschutzvorrichtung (oder eine Steuereinheit) kann eingerichtet sein, die aktuelle Position der Blendschutzvorrichtung zu ermitteln. Desweiteren kann die Blendschutzvorrichtung (oder eine Steuereinheit) eingerichtet sein, die aktuelle Position mit den ein oder mehreren Fixpositionen zu vergleichen. Wenn erkannt wird, dass sich die Blendschutzvorrichtung nicht in einer der ein oder mehreren Fixpositionen befindet, so können ein oder mehrere der folgenden Maßnahmen eingeleitet werden: Ausgabe eines (akustischen oder optischen) Warnhinweises, und/oder automatisches Bewegen der Blendschutzvorrichtung in eine der ein oder mehreren Fixpositionen (mittels einer geeigneten Bewegungsvorrichtung). Alternativ oder ergänzend können die ein oder mehreren Fixpositionen mittels eines "Einrast"-Mechanismus implementiert werden. Durch einen derartigen "Einrast"-Mechanismus kann sichergestellt werden, dass die Blendschutzvorrichtung dauerhaft nur in einer der ein oder mehreren Fixpositionen positioniert werden kann. Die Bereitstellung von Fixpositionen ermöglicht es, das mit der Blendschutzvorrichtung verbundene Verletzungsrisiko zu reduzieren.

Insbesondere kann die Blendschutzvorrichtung eingerichtet sein, die Blendenfläche zu verkleinern, wenn die Blendschutzvorrichtung in der hochgeklappten Position ist oder in Richtung der hochgeklappten Position bewegt wird. Alternativ oder ergänzend kann die Blendschutzvorrichtung eingerichtet sein, die Blendenfläche zu vergrößern, wenn die Blendschutzvorrichtung in der heruntergeklappten Position ist oder in Richtung der heruntergeklappten Position bewegt wird. Desweiteren kann die Blendschutzvorrichtung eingerichtet sein, einen Ausklappwinkel der Blendschutzvorrichtung zu ermitteln und die Blendenfläche mit steigendem Ausklappwinkel zu vergrößern.

Die Blendschutzvorrichtung kann einen Sensor oder ein Mittel zur Bestimmung der Position und/oder des Ausklappwinkels der Blendschutzvorrichtung umfassen. Der Sensor kann z.B. einen Gyrosensor umfassen. Insbesondere kann die Blendschutzvorrichtung einen Gyro-/Beschleunigungssensor umfassen. Der Sensor kann fest und/oder starr mit der Blendschutzvorrichtung verbunden sein. Der Sensor kann einen "Gyrosensor" für die Ermittlungen von Drehbewegungen und/oder einen "Beschleunigungssensor" für die Ermittlung von linearen Beschleunigungen umfassen. Anhand eines Gyrosensors kann eine Drehbewegung der Blendschutzvorrichtung erfasst werden (z.B. zur Ermittlung eines Ausklappwinkels der Blendschutzvorrichtung).

Die Blendschutzvorrichtung kann eingerichtet sein, Informationen bzgl. einer Licht-Trajektorie zwischen einer Blendquelle und einem Auge des Insassen des Fahrzeugs zu ermitteln. Zu diesem Zweck kann die Blendschutzvorrichtung auf Bilddaten einer Frontkamera und einer Rückkamera zurückgreifen, um die Position der Blendquelle und die Position des Auges oder der Augen des Insassen zu ermitteln. Anhand der Positionen kann die Licht-Trajektorie ermittelt werden.

Die Blendschutzvorrichtung kann eingerichtet sein, die Lichtdurchlässigkeit der lichtdurchlässigen Fläche in einem ersten Bereich zu reduzieren, um eine Blendwirkung der Blendquelle auf den Insassen des Fahrzeugs zu reduzieren. Andere Bereiche der lichtdurchlässigen Fläche können weiterhin eine relativ hohe Lichtdurchlässigkeit aufweisen, um den Sichtbereich des Insassen möglichst wenig zu reduzieren.

Die Blendschutzvorrichtung kann weiter eingerichtet sein, die Blendenfläche derart zu vergrößern, dass die lichtdurchlässige Fläche des beweglichen Teils in die Licht-Trajektorie hineinreicht. Insbesondere kann der bewegliche Teil nur so weit vergrößert werden, dass ein Ausblenden der Blendquelle ermöglicht wird. Dies hat den Vorteil, dass die lichtdurchlässige Fläche nur einen möglichst kleinen Teil des Sichtbereichs des Insassen abdeckt, und der Insasse somit einen möglichst freien (und ungedämpften) Blick auf die Scheibe des Fahrzeugs hat.

Insbesondere kann die Blendschutzvorrichtung eingerichtet sein, zu ermitteln, dass keine Blendquelle vorliegt, dessen Licht-Trajektorie zum Auge des Insassen des Fahrzeugs durch die lichtdurchlässige Fläche des beweglichen Teils zumindest teilweise verdeckt werden kann. Die Blendschutzvorrichtung (z.B. die Steuereinheit) kann daraufhin veranlassen, dass die Blendenfläche reduziert wird, d.h. dass der bewegliche Teil derart bewegt wird, dass die Blendenfläche reduziert wird. So kann gewährleistet werden, dass der bewegliche Teil nur dann in das Sichtfeld des Insassen bewegt wird, wenn dies zur Ausblendung einer Blendquelle erforderlich ist. Dadurch können die Sichtverhältnisse für den Fahrer (im Mittel) verbessert werden.

Die Blendschutzvorrichtung kann eine Frontkamera umfassen, die derart in oder an der Blendschutzvorrichtung angeordnet ist, dass die Frontkamera in der heruntergeklappten Position ein Umfeld des Fahrzeugs durch die Scheibe des Fahrzeugs erfassen kann. Insbesondere kann die Frontkamera an dem Trägerteil angeordnet sein. Desweiteren kann die Blendschutzvorrichtung eine Rückkamera umfassen, die derart in oder an der Blendschutzvorrichtung angeordnet ist, dass die Rückkamera in der heruntergeklappten Position einen Innenraum des Fahrzeugs erfassen kann. Insbesondere kann die Rückkamera an dem Trägerteil angeordnet sein. Die Frontkamera und/oder die Rückkamera können jeweils Teil eines Kamerasystems sein. Somit kann die Blendschutzvorrichtung ein Frontkamerasystem und/oder ein Rückkamerasystem umfassen. Bei den Kameras und/oder bei den Kamerasystemen kann es sich um Mono- oder Stereo-Kameras / Kamerasysteme handeln.

Wenn die Frontkamera und die Rückkamera als Teil der Blendschutzvorrichtung implementiert sind, wird die Blendschutzvorrichtung autark von anderen Fahrzeugkomponenten. Insbesondere kann so eine Blendschutzvorrichtung bereitgestellt werden, die als "Stand alone" Einheit in bereits existierende Fahrzeuge eingebaut werden kann.

Die Blendschutzvorrichtung kann eingerichtet sein, die Lichtdurchlässigkeit der lichtdurchlässigen Fläche in einem Bereich zu reduzieren, dessen Tiefe entlang eines Übergangs zwischen Trägerteil und beweglichem Teil abnimmt. Der abgedunkelte Bereich kann beispielsweise die Form eines Keils aufweisen. Die Tiefe kann insbesondere mit einem wachsenden Abstand von einer Gegenfahrbahn des Fahrzeugs reduziert werden. Dadurch kann erreicht werden, dass tiefliegende Blendquellen (z.B. die Scheinwerfer eines entgegenkommenden Fahrzeugs) ausgeblendet werden, und weiterhin eine weitestgehend uneingeschränkte Sicht auf den Verkehr der eigenen Fahrbahn möglich ist.

Die Scheibe des Fahrzeugs (z.B. die Frontscheibe) kann eine erste Polarisierungsebene aufweisen, in der Licht bevorzugt durchgelassen wird. Desweiteren kann die lichtdurchlässige Fläche eine zweite Polarisierungsebene aufweisen, in der Licht bevorzugt durchgelassen wird. Die lichtdurchlässige Fläche kann derart in der Blendschutzvorrichtung angeordnet sein, dass in der heruntergeklappten Position die erste und zweite Polarisierungsebene substantiell übereinstimmen. Dadurch kann erreicht werden, dass die Sicht des Insassen durch die Scheibe von der lichtdurchlässigen Fläche (im lichtdurchlässigen Zustand) möglichst wenig beeinträchtigt wird. Außerdem können durch die Verwendung der lichtdurchlässigen Fläche (und die damit verbundene Polarisierung des Lichtes) unangenehme Spiegelungen an der Scheibe des Fahrzeugs beseitigt werden.
Der Trägerteil kann lichtundurchlässig sein. Desweiteren kann der Trägerteil die Maße einer herkömmlichen Sonnenblende eines Fahrzeugs aufweisen. Auf einer Rückseite, die in der heruntergeklappten Position der Blendschutzvorrichtung dem Innenraum des Fahrzeugs zugewandt ist, kann der Trägerteil einen Spiegel aufweisen. Somit kann der Trägerteil dazu verwendet werden, die Funktionen einer herkömmlichen Sonnenblende bereitzustellen. Dadurch kann die Akzeptanz der in diesem Dokument beschriebenen Blendschutzvorrichtung bei dem Insassen des Fahrzeugs erhöht werden.
Wie oben dargelegt, ist der bewegliche Teil der Blendschutzvorrichtung bewegbar angeordnet. Zu diesem Zweck kann der Trägerteil eine Hülle mit einem Hohlraum zur Aufnahme des beweglichen Teils umfassen oder bilden. Durch die Hülle kann eine auf dem beweglichen Teil angeordnete lichtdurchlässige Fläche vor Verunreinigungen und/oder vor Schäden geschützt werden.

Gemäß einem sechsten Aspekt der Erfindung, in Kombination mit den zuvor genannten Aspekten und ihrer Ausführungsbeispiele der Erfindung, wird eine Blendschutzvorrichtung beschrieben, welche eingerichtet ist, bewegbar im Innenraum eines Fahrzeugs angeordnet zu werden, so dass die Blendschutzvorrichtung in eine heruntergeklappte Position und in eine hochgeklappte Position gebracht werden kann. Die Blendschutzvorrichtung kann derart ausgelegt sein, dass sie in der heruntergeklappten Position die Sicht eines Insassen des Fahrzeugs auf einen Teil einer Scheibe oder eines Fensters des Fahrzeugs bedeckt. Die Blendschutzvorrichtung umfasst eine Blendenfläche. Die Blendenfläche kann eine Krümmung aufweisen. In der heruntergeklappten Position der Blendschutzvorrichtung kann die Krümmung in Bezug auf die Scheibe des Fahrzeugs konvex sein. Weitere, in diesem Dokument beschriebene Merkmale einer Blendschutzvorrichtung können auch für diese Blendschutzvorrichtung verwendet werden.
Die Verwendung einer gekrümmten Blendenfläche hat den Vorteil, dass die Blendenfläche weiter in einen Sichtbereich des Insassen des Fahrzeugs eingebracht werden kann, und dennoch die Blendschutzvorrichtung in komfortabler Weise in verschiedene Positionen (insbesondere in die hochgeklappte und heruntergeklappte Position) gebracht werden kann. Durch die Verwendung einer gekrümmten Blendenfläche ergibt sich weiter der Vorteil, dass sich zwischen Fahrer und Blendenfläche einer größerer Abstand ergibt, der für einen erhöhten Komfort (Freiraum für Hände und Kopf) und für ein reduziertes Verletzungs- und Beschädigungsrisiko (z.B. durch Hängenbleiben an der Blendenfläche, z.B. beim Ein- oder Aussteigen) sorgt. Außerdem kann bei einer Blendschutzvorrichtung mit einem lichtdurchlässigen Teil aufgrund der Krümmung ein größerer effektiver abdunkelbarer Bereich bereitgestellt werden. Desweiteren kann der lichtdurchlässige Teil senkrecht zur Blickrichtung positioniert werden, und somit ggf. als Display oder Monitor (z.B. zur Darstellung von Informationen) verwendet werden. Die Darstellung von Informationen kann abhängig von der Fahrsituation erfolgen.

Gemäß einem siebten Aspekt der Erfindung, in Kombination mit den zuvor genannten Aspekten und ihrer Ausführungsbeispiele der Erfindung, ist eine Blendschutzvorrichtung eingerichtet, bewegbar im Innenraum eines Fahrzeugs angeordnet zu werden, so dass die Blendschutzvorrichtung in eine heruntergeklappte Position und in eine hochgeklappte Position gebracht werden kann, wobei die Blendschutzvorrichtung in der heruntergeklappten Position die Sicht eines Insassen des Fahrzeugs auf einen Teil einer Frontscheibe des Fahrzeugs bedeckt. Die Blendschutzvorrichtung umfasst weiterhin
- eine erste Blendenfläche, die eine lichtdurchlässige Fläche aufweist, deren Lichtdurchlässigkeit veränderbar ist; und
- eine nicht-transparente Blendenfläche, die bewegbar angeordnet ist, und die eingerichtet ist, in einer ersten Position die erste Blendenfläche zumindest teilweise zu bedecken, und in einer zweiten Position eine Seitenscheibe des Fahrzeugs zu bedecken, wenn die Blendschutzvorrichtung in der heruntergeklappten Position ist.

Die Blendschutzvorrichtung kann als Doppelklappe ausgeführt sein. Weitere in diesem Dokument beschriebene Merkmale einer Blendschutzvorrichtung können auch für diese Blendschutzvorrichtung verwendet werden. Die Blendschutzvorrichtung kann in der heruntergeklappten Position die Sicht eines Insassen des Fahrzeugs auf einen Teil einer Frontscheibe des Fahrzeugs bedecken. Die Blendschutzvorrichtung umfasst eine erste Blendenfläche (z.B. eine erste Fläche im Sinne einer ersten Klappe einer Doppelklappe), die eine lichtdurchlässige Fläche aufweist, deren Lichtdurchlässigkeit veränderbar ist. Desweiteren kann die Blendschutzvorrichtung eine nicht-transparente Blendenfläche umfassen (z.B. eine zweite Fläche im Sinne einer zweiten Klappe einer Doppelklappe), die bewegbar (z.B. an der ersten Blendenfläche) angeordnet ist, und die eingerichtet ist, in einer ersten Position die erste Blendenfläche (d.h. die erste Klappe) zumindest teilweise zu bedecken, und in einer zweiten Position eine Seitenscheibe des Fahrzeugs zu bedecken, wenn die Blendschutzvorrichtung in der heruntergeklappten Position ist. So kann in effizienter Weise ggf. gleichzeitig ein frontaler und einer seitlicher Blendschutz bereitgestellt werden.

Eine Blendschutzvorrichtung insbesondere gemäß der fünften, sechsten und siebten Aspekte der Erfindung kann weiterhin zumindest eines der folgenden Merkmale aufweisen:
- Sie kann einen beweglichen Teil aufweisen, der eine lichtdurchlässige Fläche aufweist, dessen Lichtdurchlässigkeit veränderbar ist.
- Sie kann einen Motor umfassen, der eingerichtet ist, den beweglichen Teil zu bewegen, um die Blendenfläche zu vergrößern oder zu verkleinern.
- Sie kann eingerichtet sein,
   - eine Position der Blendschutzvorrichtung zu ermitteln und
   - den beweglichen Teil in Abhängigkeit von der ermittelten Position der Blendschutzvorrichtung zu bewegen.
- Sie kann eingerichtet sein, die Blendenfläche zu verkleinern, wenn die Blendschutzvorrichtung in der hochgeklappten Position ist oder in Richtung der hochgeklappten Position bewegt wird und/oder
   - die Blendenfläche zu vergrößern, wenn die Blendschutzvorrichtung in der heruntergeklappten Position ist oder in Richtung der heruntergeklappten Position bewegt wird.
- Sie kann eingerichtet sein, einen Ausklappwinkel der Blendschutzvorrichtung zu ermitteln und die Blendenfläche mit steigendem Ausklappwinkel zu vergrößern.
- Sie kann eingerichtet sein, Informationen bzgl. einer Licht-Trajektorie zwischen einer Blendquelle und einem Auge des Insassen des Fahrzeugs zu ermitteln.
- Sie kann eingerichtet sein, die Lichtdurchlässigkeit der lichtdurchlässigen Fläche in einem ersten Bereich zu reduzieren, um eine Blendwirkung der Blendquelle auf den Insassen des Fahrzeugs zu reduzieren.
- Sie kann eingerichtet sein, die Blendenfläche derart zu vergrößern, dass die lichtdurchlässige Fläche des beweglichen Teils in die Licht-Trajektorie hineinreicht.
- Sie kann eingerichtet sein zu ermitteln, dass keine Blendquelle vorliegt, deren Licht-Trajektorie zum Auge des Insassen des Fahrzeugs durch die lichtdurchlässige Fläche des beweglichen Teils zumindest teilweise verdeckt werden kann und daraufhin die Blendenfläche zu reduzieren.
- Sie kann eingerichtet sein, dass
   - wenn die Scheibe des Fahrzeugs eine erste Polarisierungsebene aufweist, in der Licht bevorzugt durchgelassen wird,
   - die lichtdurchlässige Fläche eine zweite Polarisierungsebene aufweist, in der Licht bevorzugt durchgelassen wird, wobei
   - die lichtdurchlässige Fläche derart angeordnet ist, dass in der heruntergeklappten Position die erste und zweite Polarisierungsebene substantiell übereinstimmen.
- Sie kann eingerichtet sein, die Lichtdurchlässigkeit der lichtdurchlässigen Fläche in einem Bereich zu reduzieren, dessen Tiefe entlang eines Übergangs zwischen Trägerteil und beweglichem Teil abnimmt.
- Sie kann so eingerichtet sein, dass der bewegliche Teil derart ausgelegt ist, dass im heruntergeklappten Zustand die Blendenfläche in vertikaler Richtung vergrößert werden kann.
- Sie kann einen Sensor zur Bestimmung einer Position der Blendschutzvorrichtung umfassen.
- Sie kann umfassen:
   - eine Frontkamera, die derart in der Blendschutzvorrichtung angeordnet ist, dass die Frontkamera in der heruntergeklappten Position ein Umfeld des Fahrzeugs durch die Scheibe des Fahrzeugs erfassen kann
   - und eine Rückkamera, die derart in der Blendschutzvorrichtung angeordnet ist, dass die Rückkamera in der heruntergeklappten Position einen Innenraum des Fahrzeugs erfassen kann,
   - wobei die Frontkamera und/oder die Rückkamera an dem Trägerteil angeordnet sein können.
- Sie kann so eingerichtet sein, dass der Trägerteil lichtundurchlässig ist und/oder
   - auf einer Rückseite, die in der heruntergeklappten Position einem Innenraum des Fahrzeugs zugewandt ist, einen Spiegel aufweist, und/oder
   - eine Hülle mit einem Hohlraum zur Aufnahme des beweglichen Teils umfasst.

Gemäß einem weiteren Aspekt der Erfindung wird ein Fahrzeug (z.B. ein Personenkraftwagen, ein Lastkraftwagen oder ein Schienenfahrzeug) beschrieben, das eine in diesem Dokument beschriebene Blendschutzvorrichtung umfasst.

Es ist zu beachten, dass die jeweiligen in diesem Dokument beschriebenen Erfindungs-Aspekte, Verfahren, Vorrichtungen und Systeme sowohl alleine, als auch in Kombination mit anderen in diesem Dokument beschriebenen Erfindungs-Aspekten, Verfahren, Vorrichtungen und Systemen verwendet werden können. Desweiteren können jegliche Aspekte der in diesem Dokument beschriebenen Verfahren, Vorrichtung und Systemen in vielfältiger Weise miteinander kombiniert werden. Insbesondere können die Merkmale der Ansprüche in vielfältiger Weise miteinander kombiniert werden.
Im Weiteren wird die Erfindung anhand von Ausführungsbeispielen näher beschrieben. Dabei zeigt
Figur 1a eine beispielhafte gekrümmte Blende in der Seitenansicht;
Figur 1b eine beispielhafte verlängerbare Blende in der Seitenansicht;
Figur 1c eine weitere beispielhafte verlängerbare Blende in der Seitenansicht;
Fig. 1d eine Windschutzscheibe mit einer beispielhaften Blende aus Sicht eines Fahrers;
Fig. 1e eine beispielhafte verlängerbare und gekrümmte Blende in der Seitenansicht;
Fig. 1f eine beispielhafte, als Doppelklappe ausgebildete, Blende;
Figur 2a eine Frontansicht einer beispielhaften Blende mit abgedunkeltem Keil zur Ausblendung der Scheinwerfer entgegenkommender Fahrzeuge;
Figur 2b eine Frontansicht einer beispielhaften Blende mit abgedunkelten punktförmigen Bereichen zur punktuellen Ausblendung der Scheinwerfer eines entgegenkommenden Fahrzeugs;
Figur 3 eine Darstellung der Polarisierung des in den Innenraum eines Fahrzeugs einfallenden Lichts;
Figur 4a einen sichtbaren Artefakt, der durch den abgedunkelten Bereich einer abdunkelbaren Fläche erzeugt wird;
Figur 4b eine beispielhafte abdunkelbare Fläche, durch die der sichtbare Artefakt beseitigt werden kann;
Figur 4c eine beispielhafte Blende mit einer Vielzahl von abdunkelbaren Schichten;
Figur 4d eine beispielhafte Blende mit einer Vielzahl von abdunkelbaren Schichten zur Ausblendung einer Blendquelle für das rechte Auge;
Figur 4e eine beispielhafte Blende mit einer Vielzahl von abdunkelbaren Schichten zur Ausblendung einer Blendquelle für das linke Auge;
Figur 4f einen beispielhaften Betrachtungsrichtungsbereich;
Figur 5a eine beispielhafte Blende mit einer abdunkelbaren Schicht mit örtlich (ggf. stetig) variablem Betrachtungsrichtungsbereich zur Ausblendung einer Blendquelle für das linke Auge;
Figur 5b eine beispielhafte Blende mit einer abdunkelbaren Schicht mit örtlich (ggf. stetig) variablem Betrachtungsrichtungsbereich zur Ausblendung einer Blendquelle für das rechte Auge; und
Figur 6 ein Blockdiagram einer beispielhaften Vorrichtung zur Ermittlung der Position eines Auges eines Fahrers.

Wie eingangs dargelegt, befasst sich das vorliegende Dokument mit der Reduzierung der Blendwirkung von ein oder mehreren Blendquellen für einen Fahrer eines Fahrzeugs.

In diesem Zusammenhang wird eine Sonnenblende beschrieben, die zumindest teilweise einen abdunkelbaren Bereich oder eine abdunkelbare Fläche umfasst. Die Sonnenblende kann herunterklappbar an einem oberen Rahmen des Fahrzeugs befestigt sein, so dass die Sonnenblende in den Sichtbereich des Fahrers heruntergeklappt werden kann. Andererseits kann die Sonnenblende auch nach oben geklappt werden, um die Sonnenblende aus dem Sichtbereich des Fahrers herauszunehmen. Durch die Verwendung einer Sonnenblende kann die Windschutzscheibe des Fahrzeugs unverändert erhalten bleiben. Insbesondere kann dadurch sichergestellt werden, dass die Transparenz der Windschutzscheibe nicht durch das Aufbringen einer abdunkelbaren Schicht reduziert wird.

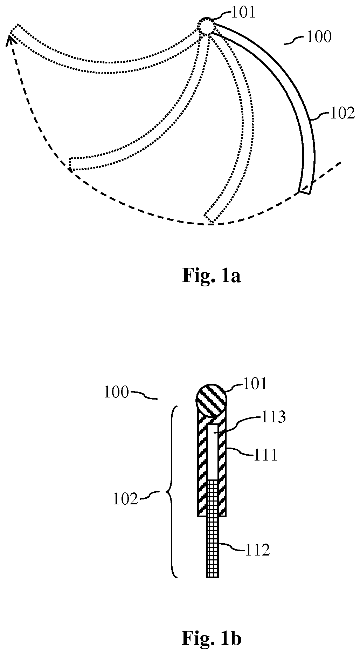

Fig. 1a zeigt eine beispielhafte Blende 100 in der Seitenansicht. Die Blende 100 ist in Fig. 1a und in weiteren Figuren zur Veranschaulichung mit eckigen Kanten dargestellt. Es sei darauf hingewiesen, dass abgerundete Ecken und Kanten verwendet werden können, um eine Verletzungsgefahr an der Blende 100 zu reduzieren. Die Blende 100 ist mit einer Achse 101 schwenkbar an dem Fahrzeug befestigt. Desweiteren umfasst die Blende 100 eine Blendenfläche 102, die dazu verwendet werden kann, die Blendwirkung einer Blendquelle auf die Sicht eines Fahrers oder Insassen des Fahrzeugs zu reduzieren. Die in Fig. 1a dargestellte Blende 100 hat eine gekrümmte oder gewölbte Form. Dies kann vorteilhaft sein, um bei einem vorgegebenen abzudunkelnden Bereich den für den Schwenkvorgang der Blende 100 erforderlichen Platz zu reduzieren. Insbesondere kann dadurch gewährleistet werden, dass auch dann, wenn die Blende 100 weiter in den Sichtbereich herunter ragt, als heutige Sonnenblenden, die Blende 100 weiterhin über das Lenkrad des Fahrzeugs hinweg hochgeklappt werden kann. Außerdem ergeben sich vielfältige Vorteile in Bezug auf Bewegungsfreiräume für den Fahrer, in Bezug auf ein reduziertes Beschädigungsrisiko und in Bezug auf eine Erhöhung eines ggf. abdunkelbaren Anteils der Blende 100. Der Schwenkvorgang der Blende 100 ist in Fig. 1a durch die gepunkteten Blenden und den gestrichelten Pfeil dargestellt. Die Blende 100 weist bevorzugt einen Krümmungsradius von ca. 15cm auf.

Wie oben dargelegt, kann die Blende 100 weiter in das Sichtfeld eines Fahrers oder eines Insassen herunter ragen als heutige Sonnenblenden (z.B. um ca. 30% mehr als heutige Sonnenblenden). Dadurch kann gewährleistet werden, dass auch relativ niedrig liegende Blend- oder Lichtquellen (wie z.B. eine niedrig stehende Sonne oder die Scheinwerfer eines entgegenkommenden Fahrzeugs) durch die Blende 100 abgedeckt werden können. Insbesondere können die Abmessungen und die Form der Blende 100 derart ausgelegt sein, dass Personen ab einer bestimmten Körpergröße (z.B. ab 160 cm Körpergröße) so durch die Blende 100 blicken, dass die Scheinwerfer entgegenkommender Fahrzeuge abgedeckt werden. Um das gleiche Ziel auch für Personen mit noch kleinerer Körpergröße (z.B. um 150 cm Körpergröße) zu erreichen, kann die Blende 100 mit einer absenkbaren Aufhängung am Fahrzeug angebracht sein, durch die die Blende 100 in einen bestimmten Maße abgesenkt werden kann (z.B. um ca. 5cm). Da kleine Personen typischerweise eine niedrige Lenkradeinstellung verwenden, kann dennoch sichergestellt werden, dass die Blende bei Bedarf hochgeklappt werden kann.

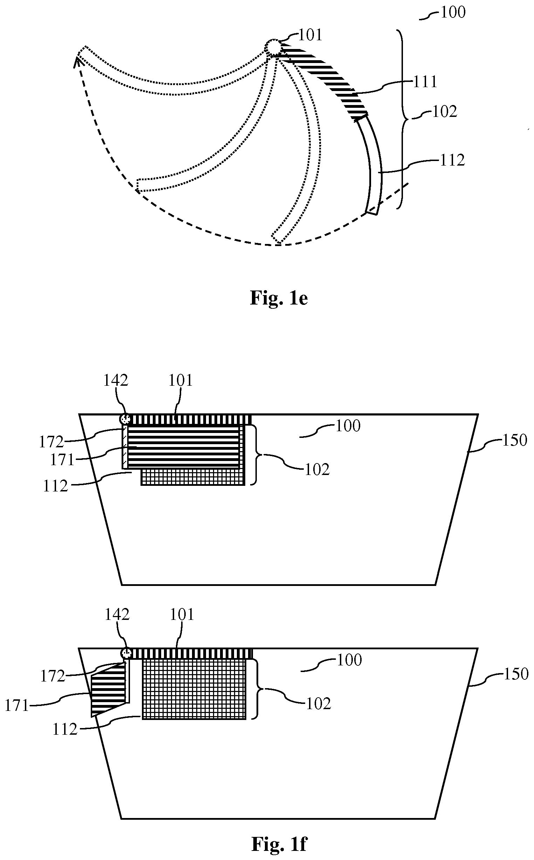

Die Blende 100 kann derart an dem Fahrzeug angebracht sein, dass die Blende auch zur Seite geklappt werden kann, um seitlich einfallendes Licht abzudecken. Alternativ oder ergänzend kann die Blende 100 als Doppelklappe ausgebildet sein. Eine Klappe der Doppelklappe, die eine lichtundurchlässige Fläche aufweist, kann dann im heruntergeklappten Zustand der Blende zur Seite aufgeklappt werden, um durch ein Seitenfenster des Fahrzeugs einfallendes Licht abzudecken. Dies ist beispielhaft in Fig. 1f dargestellt. Die in Fig. 1f dargestellte Blende 100 umfasst die Blendenfläche 102. Die Achse 101 kann an einem Gelenk 142 bewegbar befestigt sein. Die Blendenfläche 102 kann einen transparenten oder lichtdurchlässigen Teil 112 umfassen. Der transparente oder lichtdurchlässige Teil 112 kann eine entspiegelte transparente Scheibe umfassen. Fig. 1f zeigt die Blende 100 in einer Frontansicht vor einer Windschutzscheibe 150 eines Fahrzeugs.

Die Blende 100 umfasst eine Klappe 171, die in einer ersten (zugeklappten) Position die Blendenfläche 102 (insbesondere den lichtdurchlässigen Teil 112) zumindest teilweise bedecken kann (dies ist in der oberen Darstellung von Fig. 1f gezeigt). In der ersten Position kann die Klappe 171 die Funktion einer konventionellen Sonnenblende wahrnehmen. Beispielsweise kann die Klappe 171 auch einen Schminkspiegel umfassen. Die Klappe 171 kann über eine Klappen-Achse 172 in eine zweite (aufgeklappte) Position gebracht werden. Die Klappen-Achse 172 kann z.B. an dem Gelenk 142 befestigt sein (dies ist in der unteren Darstellung von Fig. 1f gezeigt). In der zweiten Position bedeckt die Klappe 171 z.B. ein Seitenfenster des Fahrzeugs.

Die Blende 100 umfasst zumindest einen Teilbereich, der transparent oder lichtdurchlässig ist, aber bei Bedarf abdunkelbar ist. Der abdunkelbare Bereich der Blende 100 kann eine Vielzahl von abdunkelbaren Elementen (z.B. Pixel) umfassen. Die abdunkelbaren Elemente können jeweils einzeln angesteuert und abgedunkelt werden. Somit kann der abgedunkelte Bereich der Blende 100 an die Form einer Blendquelle angepasst werden. Insbesondere kann der abgedunkelte Bereich der Blende 100 kontinuierlich an die Form, die Größe und/oder die Position der Blendquelle angepasst werden. Dadurch kann bei einer geringen Beeinflussung des Sichtfelds des Fahrers die Blendwirkung durch die Blendquelle reduziert werden. Der transparente und abdunkelbare Bereich der Blende 100 kann z.B. ein LC (Liquid Crystal) Display umfassen. Typischerweise umfasst der transparente und abdunkelbare Bereich der Blende 100 zumindest den Bereich der Blende 100, der in den Sichtbereich des Fahrers auf die Straße eingreift.

Fig. 1b zeigt eine beispielhafte verlängerbare Blende 100 in Seitenansicht. Die Blende 100 umfasst einen konstant abgedunkelten Teilbereich 111 (auch als Trägerfläche 111 bezeichnet) und einen abdunkelbaren Teilbereich 112 (auch als abdunkelbare Fläche oder abdunkelbares Display 112 bezeichnet). Die Teilbereiche 111 und 112 bilden die Blendenfläche 102. In dem in Fig. 1b dargestellten Beispiel ist der abdunkelbare Teilbereich 112 der Blende 100, derart ausgebildet, dass er aus dem abgedunkelten Teilbereich 111 herausgezogen bzw. herausgefahren oder in den Teilbereich 111 hineingeschoben bzw. hineingefahren werden kann. Mit anderen Worten, die Blende 100 kann einen abdunkelbaren Bereich 112 umfassen, der bei Bedarf die Blendenfläche 102 der Blende 100 vergrößert. Zu diesem Zweck kann der konstant abgedunkelte Teilbereich 111 als eine Hülle mit einem Hohlraum 113 ausgebildet sein, in die der abdunkelbare Bereich 112 aufgenommen werden kann. Alternativ oder ergänzend kann die abdunkelbare Fläche 112 anhand von Schienen hinter oder vor die Trägerfläche 111 geschoben werden, um sie aus dem Sichtfeld des Fahrers zu nehmen oder um sie in das Sichtfeld des Fahrers zu schieben.

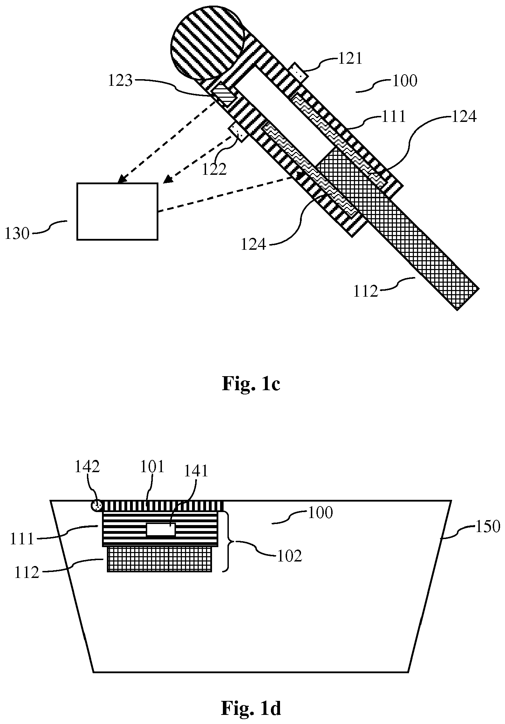

Mit anderen Worten, Fig. 1b zeigt eine Blende 100 bei der ein relativ schmales transparentes und abdunkelbares Display 112 in eine nicht-transparente Sonnenblende 111 integriert ist. Das abdunkelbare Display 112 (d.h. die abdunkelbare Fläche 112) ist an der Unterkante der Sonnenblende herausziehbar oder herausfahrbar. Insbesondere kann die Blende 100 einen Motor und/oder einen Mechanismus umfassen, der eingerichtet ist, die abdunkelbare Fläche 112 aus dem Sichtfeld des Fahrers zu entfernen oder in das Sichtfeld des Fahrers zu bewegen. Ein solcher Mechanismus 124 ist in Fig. 1c schematisch dargestellt.

Durch eine in dem Sichtfeld des Fahrers platzierte abdunkelbare Fläche 112 kann insbesondere bei Nachtfahrten die Blendung des Fahrers durch entgegenkommende Fahrzeuge weitestgehend behoben werden. Insbesondere können durch eine derart platzierte Fläche 112 relativ niedrig platzierte Blendquellen ausgeblendet werden.

Eine aus einer abgedunkelten Fläche 111 und einer abdunkelbaren Fläche 112 bestehende Blende 100 ist vorteilhaft, da bereits bekannte Funktionen einer Sonnenblende erhalten bleiben können. Insbesondere kann die abgedunkelte Fläche 111 weiterhin in bekannter Weise verwendet werden (Klappbewegung noch vorne und hinten, Klappbewegung zur Seite, Befestigung eines Schminkspiegels, etc.). Die zusätzliche (ggf. ausfahrbare) abdunkelbare Fläche 112 kann dann dazu verwendet werden, einen (ggf. adaptiven) Blendschutz gegen tiefliegende Blendquellen (wie z.B. Scheinwerfer) bereitzustellen.

Eine abdunkelbare und ausfahrbare Fläche 112 ermöglicht es weiter, die Tiefe der Blende 100 zu reduzieren (z.B. um 3-4 cm). Insbesondere kann die abgedunkelte Trägerfläche 111 der Blende 100 in der Tiefe (d.h. in der Ausbreitung senkrecht zur Schwenkrichtung der Blende 100) reduziert werden. Dies kann beispielsweise bei Cabriolets zur Reduzierung der Windlaufquerschnitte von Vorteil sein. Bei Blendung durch die Sonne kann die transparente Displayscheibe 112 ausgefahren und flächig abgedunkelt werden. So kann dann die gleiche effektive Tiefe einer heutigen Sonnenblende bereitgestellt werden.

Die Blende 100 kann Mittel 123 zur Bestimmung eines Ausklappwinkels der Blende 100 umfassen (siehe Fig. 1c). Ein beispielhaftes Mittel 123 zur Bestimmung des Auskappwinkels der Blende 100 ist ein Gyrosensor. Eine Steuereinheit 130 (z.B. eine Steuereinheit der Blende 100) kann eingerichtet sein, auf Basis des Ausklappwinkels zu bestimmen, in welchem Ausmaß das abdunkelbare Display 112 herausgefahren wird. Insbesondere kann auf Basis des Ausklappwinkels ermittelt werden, wie weit die abdunkelbare Fläche 112 herausgefahren werden muss, um eine bestimmte Trajektorie zwischen einer Lichtquelle und einem Auge des Fahrers zu unterbrechen.

Fig. 1c zeigt eine Blende 100, die eine Frontkamera 121 umfasst, mit der eine äußere Umgebung des Fahrzeugs (typischerweise vor dem Fahrzeug) erfasst werden kann. Anhand der von der Frontkamera 121 erfassten Bilddaten kann die Position einer Licht- oder Blendquelle erfasst werden. Desweiteren umfasst die Blende 100 eine Rückkamera 122, die eingerichtet ist, einen Innenraum des Fahrzeugs zu erfassen. Insbesondere kann anhand der von der Rückkamera 122 erfassten Bilddaten die Position der Augen des Fahrers ermittelt werden. Die Steuereinheit 130 kann eingerichtet sein, anhand der Bilddaten der Frontkamera 121 und der Rückkamera 122 sowie anhand des Ausklappwinkels der Blende 100 eine Trajektorie zwischen der Position der Lichtquelle und der Position eines oder der Augen des Fahrers zu bestimmen. Desweiteren kann die Steuereinheit 130 eingerichtet sein, den Mechanismus 124 zu veranlassen, den abdunkelbaren Blendenteil 112 so weit auszufahren, dass der abdunkelbare Blendenteil in die Trajektorie zwischen der Position der Lichtquelle und der Position eines oder der Augen des Fahrers hineinreicht. Darüber hinaus kann die Steuereinheit 130 eingerichtet sein, ein oder mehrere abdunkelbare Elemente des Blendenteils 112 derart abzudunkeln, dass durch die Lichtquelle ein Schatten auf das oder die Augen des Fahrers geworfen wird. Desweiteren kann die Steuereinheit 130 eingerichtet sein, das Blendenteil 112 nur insoweit abzudunkeln, dass die Blendwirkung der Lichtquelle beseitigt wird, aber der Sichtbereich des Fahrers ansonsten unbeeinträchtigt bleibt.

Eine derartige Blende 100 hat den Vorteil, dass der abdunkelbare Blendenteil 112 nur dann in das Sichtfeld des Fahrers eingeführt wird, wenn auch tatsächlich eine Blendquelle detektiert wurde. Wird keine Blendquelle detektiert, so kann der Blendenteil 112 aus dem Sichtfeld des Fahrers genommen werden, um eine maximale Transparenz des Sichtfelds durch die Windschutzscheibe des Fahrzeugs zu gewährleisten.

Der Blendschutz wird typischerweise nur im heruntergeklappten Zustand der Blende 100 benötigt. Mit anderen Worten, ein Fahrer gibt typischerweise durch Herunterklappen einer Sonnenblende zum Ausdruck, dass er/sie durch eine Lichtquelle geblendet wird, und dass er/sie die Blendwirkung reduzieren möchte. Dies ermöglicht es, wie in Fig. 1c gezeigt, die Frontkamera 121 (zum Erfassen einer Blendquelle) und die Rückkamera 122 (zum Erfassen der Position der Augen des Fahrers) an der Blende 100 selbst anzubringen. Darüber hinaus kann auch die Steuereinheit 130 als Teil der Blende 100 implementiert werden. Somit kann die Blende 100 als unabhängiges System bereitgestellt werden, und kann so auch in bereits existierenden Fahrzeugen nachgerüstet werden. Dies ermöglicht außerdem eine einfache Montage der Blende 100 im Fahrzeug, da alle Komponenten zur Bereitstellung eines adaptiven Blendschutzes in die Blende 100 integriert sind.

Die Ausführung der Blende 100 mit einem nicht transparenten Trägerteil 111 und einem ausfahrbaren transparenten Teil 112 ermöglicht die Positionierung der Frontkamera 121 auf dem nicht transparenten Teil 111. Insbesondere kann die Frontkamera 121 möglichst nah an der (ggf. auf der) Blickachse des Insassen (Fahrers) nach vorne positioniert werden. Dadurch werden Paralaxe-Fehler so gut beherrschbar, dass für die Berechnung der Licht-Trajektorien von einer Blendquelle zu einem Auge des Insassen eine Mono-Kamera 121 und Mono-Bildverarbeitungsalgorithmen verwendet werden können. Dies ist typischerweise nicht der Fall, wenn die Frontkamera 121 nicht in der Nähe von der Blickachse des Insassen positioniert wird. Die Paralaxe-Fehler erfordern dann typischerweise die Verwendung von Stereo-Kamerasystemen und entsprechender Bildverarbeitung. Die Positionierung der Frontkamera 121 und/oder der Rückkamera 122 auf der Blende 100 (nach Möglichkeit auf der Blickachse des Insassen) ermöglicht somit die Reduktion der Kosten und der Komplexität von adaptiven Blendenvorrichtungen.

Wie oben dargelegt, kann die Blende 100 einen Mechanismus 124 zum automatischen Herunterfahren und/oder Hochfahren des abdunkelbaren Blendenteils 112 umfassen. Dieser Mechanismus 124 kann durch die Steuereinheit 130 angesteuert werden. Durch die Verwendung eines automatischen Mechanismus 124 kann u.a. vermieden werden, dass der Fahrer das abdunkelbare Blendenteil 112 anfasst und dadurch die Transparenz des Blendenteils 112 im nicht-abgedunkelten Zustand reduziert.

Die Blende 100 kann über die Achse 101 hoch- bzw. heruntergeklappt werden. Die Steuereinheit 130 kann eingerichtet sein, das Herunterklappen der Blende 100 zu detektieren (z.B. über die Mittel 123 zur Bestimmung des Aufklappwinkels). Desweiteren kann die Steuereinheit 130 eingerichtet sein, die oben beschriebene Detektion einer Blendquelle und die adaptive Reduzierung der Blendwirkung zu veranlassen, sobald der Aufklappwinkel einen vordefinierten Schwellwert erreicht oder überschreitet. Alternativ oder ergänzend kann die Steuereinheit 130 eingerichtet sein, den Mechanismus 124 zu veranlassen, den abdunkelbaren Blendenteil 112 hochzufahren (um die Tiefe der Blende 100 zu reduzieren), sobald der Aufklappwinkel einen vordefinierten Schwellwert unterschreitet.

Alternativ oder ergänzend kann die Blende 100 eingerichtet sein, beim Herunterklappen (d.h. bei Erhöhung des Aufklappwinkels) erst ab Erreichen eines vordefinierten minimalen Aufklappwinkels einzurasten (z.B. in einer vordefinierten Fixposition). Wird der Ausklappvorgang vor Erreichen des vordefinierten minimalen Aufklappwinkels (d.h. vor Erreichen der Fixposition) durch den Insassen beendet, so kann die Blende 100 eingerichtet sein, sich automatisch wieder in die hochgeklappte Position zurückzubewegen. In analoger Weise kann bei Reduzierung des Ausklappwinkels vorgegangen werden.
Wird der Aufklappwinkel durch den Insassen unter den vordefinierten minimalen Wert (d.h. vor die Fixposition) gebracht, so kann sich die Blende 100 automatisch in die hochgeklappte Position zurückbewegen. Mit anderen Worten, die Blende 100 kann eingerichtet sein, die möglichen Positionen der Blende 100 auf ein oder mehrere Fixpositionen zu beschränken. Dadurch wird es einem Insassen nur ermöglicht, die Blende in eine der Fixpositionen zu bringen, die z.B. aus sicherheitsrelevanten Aspekten (z.B. bei einem Fahrzeug-Crash) zuzulassen sind.

Der Mechanismus zum automatischen Bewegen in die hochgeklappte Position im Falle eines Unterschreitens des minimalen Aufklappwinkels kann mechanisch (z.B. durch Federkraft) oder elektrisch (z.B. durch einen Motor) erfolgen.

Fig. 1e zeigt eine beispielhafte gekrümmte Blende 100 in Seitenansicht. Die Blende 100 umfasst einen Trägerteil 111 und einen abdunkelbaren Teil 112. Der abdunkelbare Teil 112 kann, wie in Zusammenhang mit den Figuren 1b und 1c beschrieben, bewegbar sein. Insbesondere kann der abdunkelbare Teil 112 in den Trägerteil 111 (der dann die Funktion einer Hülle wahrnimmt) bewegt werden. Wie in Zusammenhang mit Fig. 1c dargestellt, können auch auf einer gekrümmten Blende 100 eine Frontkamera 121 und/oder eine Rückkamera 122 angebracht werden.

Fig. 1d zeigt eine Ansicht auf eine beispielhafte Blende 100 aus Sicht des Fahrers des Fahrzeugs. Die Blende 100 ist mittels der Achse 101 schwenkbar an oder in der Nähe von der oberen Kante der Windschutzscheibe 150 des Fahrzeugs angebracht. Desweiteren kann die Blende 100 über ein Gelenk 142 von der Windschutzscheibe zu der Fahrerseitigen Seitenscheibe des Fahrzeugs bewegt werden, um seitliche Blendquellen zu unterbinden. Die in Fig. 1d gezeigte Blende 100 umfasst den abgedunkelten Teil (d.h. den Trägerteil) 111 und den abdunkelbaren Teil 112. Der abdunkelbare Teil 112 kann beweglich an dem Trägerteil 111 angebracht sein, und kann dazu verwendet werden, die Tiefe der Blende 100 (in Richtung zum Lenkrad des Fahrzeugs) zu verändern. Der Trägerteil 111 der Blende 100 kann z.B. dazu verwendet werden, einen Schminkspiegel 141 bereitzustellen.

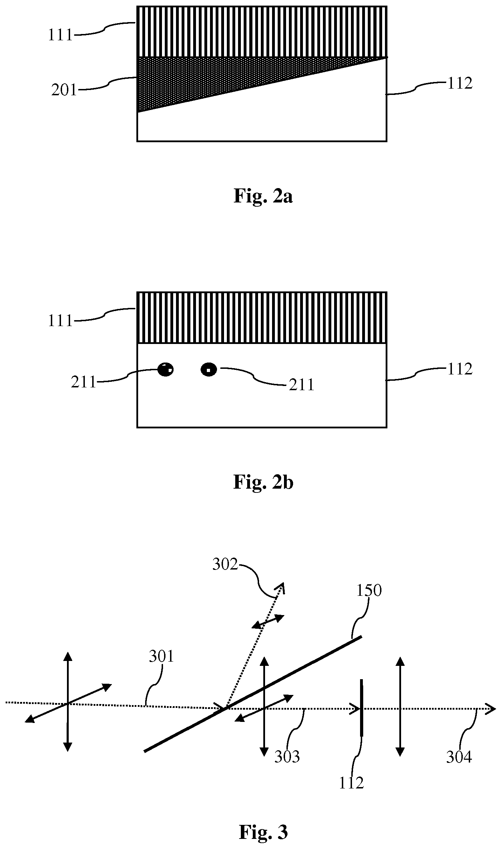

Die Figuren 2a und 2b zeigen beispielhafte Abdunkelungen der Blende 100. In einem (ggf. statischen) Modus kann die Blende 100 eingerichtet sein, mittels des abdunkelbaren Teils 112 einen Fahrerseitigen abgedunkelten Keil 201 einzublenden. Mit dem abgedunkelten Keil 201 können pauschal Lichtquellen, welche sich im Fahrerseitigen Bereich vor dem Fahrzeug befinden (z.B. die Schweinwerfer entgegenkommender Fahrzeuge), ausgeblendet werden. Andererseits ist das Sichtfeld des Fahrers im verbleibenden Bereich des abdunkelbaren Teils 112 unbeeinträchtigt. Der abdunkelbare Keil 201 kann unterschiedliche Grade von Abdunkelung umfassen. Insbesondere kann der Grad der Abdunkelung zum Trägerteil 111 hin zunehmen. So kann das Sichtfeld des Fahrers weiter vergrößert werden, und dennoch eine Ausblendung im Fahrerseitigen Bereich vor dem Fahrzeug bewirkt werden.

Die Form des Keils 201, der Grad der Abdunkelung des Keils 201, die Größe des Keils 201 können veränderbar sein. Beispielsweise kann der abgedunkelte Bereich 201 des abdunkelbaren Teils 112 über eine Benutzerschnittstelle konfiguriert werden, und damit an die Bedürfnisse und Präferenzen eines Benutzers angepasst werden.

Fig. 2b zeigt punktförmige Abdunkelungen 211 des abdunkelbaren Teils 112. Die Position und die Größe der Abdunkelungen 211 können durch die Steuereinheit 130 ermittelt werden, insbesondere anhand der Bilddaten einer Fronkamera 121 und der Bilddaten einer Rückkamera 122. Die Abdunkelungen 211 können derart ausgelegt sein, dass durch die Abdunkelungen 211 ein Schatten von einer Lichtquelle auf die Augen des Fahrers geworfen werden, und somit die Blendwirkung durch die Lichtquelle (z.B. gleißender Himmel) reduziert wird.

Der abdunkelbare Teil 112 der Blende 100 kann desweiteren zur Bereitstellung eines sogenannten Grünkeils verwendet werden. Dazu kann z.B. ein oberer Bereich des Teils 112 semitransparent abgedunkelt werden. So kann die Blendwirkung einer diffusen Lichtquelle reduziert werden.

Der abdunkelbare Teil 112 kann auch in transparenter Form dazu verwendet werden, unangenehme Spiegelungen in der Windschutzscheibe 150 zu reduzieren. Insbesondere kann der abdunkelbare Teil 112 eingerichtet sein, eintreffendes Licht zu polarisieren. Dies ist beispielhaft in Fig. 3 dargestellt. Insbesondere zeigt Fig. 3 einen Lichtstrahl 301 im Außenbereich des Fahrzeugs, der nicht polarisiert ist. Durch die Windschutzscheibe 150 eines Fahrzeugs wird typischerweise bereits eine partielle Polarisierung in vertikaler Richtung bewirkt. Das führt dazu, dass horizontal polarisiertes Licht 302 von der Windschutzscheibe 150 abprallt und partiell vertikal polarisiertes Licht 303 durch die Windschutzscheibe 150 in das Innere des Fahrzeugs dringt.

Der abdunkelbare Teil 112 der Blende 100 kann die gleiche Polarisierungsebene aufweisen wie die Windschutzscheibe 150. Dadurch kann die kombinierte Transparenz aus Windschutzscheibe 150 und abdunkelbaren Teil 112 maximiert werden. Mit anderen Worten, durch die Abstimmung der Polarisierungsebenen von Windschutzscheibe 150 und abdunkelbaren Teil 112 kann die Energie des Lichtes 304, welches den Fahrer erreicht, maximiert werden. Desweiteren hat die Verwendung eines derartigen abdunkelbaren Teils 112 den Vorteil, dass unerwünschte Spiegelungen an der Windschutzscheibe 150 (z.B. von der Oberseite der Instrumententafel) reduziert werden, so dass der Fahrer einen ungestörteren Blick auf den Verkehr erhält.

Wie eingangs dargelegt, befasst sich das vorliegende Dokument auch mit der Reduzierung von sichtbaren Artefakten aufgrund der örtlichen Ausblendung von Blendquellen. Die im Folgenden dargelegten Aspekte sind auf abdunkelbare Scheiben oder Flächen 112 im Allgemeinen anwendbar. Insbesondere kann die abdunkelbare Scheibe oder Fläche 112 Teil einer Windschutzscheibe 150 eines Fahrzeugs sein und/oder Teil einer Blende 100.

Die Figuren 4a und 4b zeigen das Augenpaar 403, 404 eines Fahrers eines Fahrzeugs. Desweiteren zeigen die Figuren 4a und 4b eine Blendquelle 401 von der ein Lichtstrahl auf das rechte Auge 403 des Fahrers geworfen wird. Zwischen Blendquelle 401 und Augenpaar 403, 404 befindet sich eine abdunkelbare Fläche 112. Die abdunkelbare Fläche weist eine lokale Abdunkelung 412 auf, durch die der Lichtstrahl zwischen Blendquelle 401 und dem rechten Auge 403 unterbrochen wird. Somit wird durch die Abdunkelung 412 ein Schatten auf das rechte Auge 412 geworfen, wodurch die Blendwirkung der Blendquelle 401 beseitigt oder zumindest reduziert wird.

Die Abdunkelung 412 ist für das linke Auge 404 des Fahrers auch sichtbar. Insbesondere bewirkt die Abdunkelung 412, dass das linke Auge 404 einen Phantom-Spot (oder Phantomfleck) 402 wahrnimmt. Der Phantom-Spot 402 kann z.B. rechts neben der Blendquelle 401 angeordnet sein. Der Phantom-Spot 402 wird typischerweise als halb-transparent wahrgenommen, da er nur von dem linken Auge 404 wahrgenommen wird, während das rechte Auge 403 des Fahrers an der Abdunkelung 412 vorbeischaut und so an der Stelle des Phantom-Spots 402 die Umgebung des Fahrzeugs wahrnimmt.

Der Phantom-Spot 402 stellt ein sichtbares Artefakt dar, das insbesondere bei Tageslicht als störend wahrgenommen werden kann. Durch dieses Artefakt kann die Verwendung von abdunkelbaren Flächen 112 zur punktuellen Ausblendung von Blendquellen 401 beeinträchtigt werden.

Abdunkelbare Flächen 112 können eine Matrix von abdunkelbaren Elementen umfassen. Beispielsweise kann eine abdunkelbare Fläche 112 eine Flüssigkristallschicht (Liquid Crystal, LC) umfassen, bei der die Transparenz einzelner Elemente durch Anlegen einer Spannung reduziert wird. Derartige abdunkelbare Flächen 112 können derart ausgelegt werden, dass sie einen bestimmten Betrachtungsrichtungsbereich aufweisen. Der Betrachtungsrichtungsbereich bewirkt, dass eine Abdunkelung 412 nur in dem vordefinierten Betrachtungsrichtungsbereich, z.B. in einem vordefinierten Winkelbereich, zu sehen ist. Außerhalb des vordefinierten Winkelbereichs ist die Abdunkelung 412 nicht zu sehen.

In Figur 4b ist die Wirkung einer abdunkelbaren Fläche 112 mit begrenztem Betrachtungsrichtungsbereich 421 dargestellt. Die Richtungsbereichsgrenzen des Betrachtungsrichtungsbereichs 421 sind durch die Seiten eines Dreiecks dargestellt. Der Betrachtungsrichtungsbereich 421 weist einen Öffnungswinkel 422 zwischen den Richtungsbereichsgrenzen auf. Wird die Abdunkelung 412 innerhalb des Betrachtungsrichtungsbereichs 421 betrachtet, so kann die Abdunkelung 412 von einem Betrachter wahrgenommen werden. In dem in Fig. 4b dargestellten Beispiel wird somit die Abdunkelung 412 von dem rechten Auge 403 wahrgenommen. Das linke Auge 404 blickt auf die Abdunkelung 412 aus einer Richtung, die außerhalb des Betrachtungsrichtungsbereichs 421 liegt. Somit wird die Abdunkelung 412 von dem linken Auge 404 nicht wahrgenommen. Dadurch entfällt auch der Phantom-Spot 402. Durch Verwendung einer abdunkelbaren Fläche 112 mit begrenztem Betrachtungsrichtungsbereich 421 können somit die durch lokale Abdunkelungen 412 verursachten Artefakte vermieden werden.

Die Eigenschaften eines Betrachtungsrichtungsbereichs 421 sind weiter in Fig. 4f veranschaulicht. Wie in Fig. 4f dargestellt, umfasst ein Betrachtungsrichtungsbereich 421 typischerweise zwei Richtungsbereichsgrenzen oder Abrisskanten 471, 472. Der Betrachtungsrichtungsbereich 421 bildet einen Zwickel, deren Kanten durch die Richtungsbereichsgrenzen 471, 472 gebildet werden. Mit anderen Worten, durch eine Richtungsbereichsgrenze 471, 472 wird eine Begrenzung des Betrachtungsrichtungsbereichs 421 definiert. Die Begrenzung des Betrachtungsbereichs ist derart, dass eine Betrachtungsrichtung auf einer Seite der Richtungsbereichsgrenze 471, 472 innerhalb des Betrachtungsrichtungsbereichs 421 liegt (z.B. die Betrachtungsrichtung mit dem rechten Auge 403), und dass eine Betrachtungsrichtung auf der anderen Seite der Richtungsbereichsgrenze 471, 472 außerhalb des Betrachtungsrichtungsbereichs 421 liegt (z.B. die Betrachtungsrichtung mit dem linken Auge 404).

Die Betrachtungsrichtungsbereiche 421 der Elemente einer abdunkelbaren Fläche 112 können eine gleichmäßige oder eine sich verändernde Ausrichtung aufweisen. Insbesondere können die Betrachtungsrichtungsbereiche 421 der einzelnen Elemente derart angeordnet sein, dass eine der Richtungsbereichsgrenzen 471, 472 der Betrachtungsrichtungsbereiche 421 der Elemente auf einen gemeinsamen Fokalpunkt (z.B. auf das rechte Auge 403 oder auf das linke Auge 404 oder auf einen Mittelpunkt zwischen dem rechten und linken Auge 403, 404) zeigt. Wie in Zusammenhang mit den Figuren 5a und 5b erläutert, kann dies für die Vermeidung von Phantom-Spots vorteilhaft sein.

Fig. 4c zeigt eine beispielhafte abdunkelbare Fläche 112 mit einer Vielzahl von abdunkelbaren Schichten 431. Die einzelnen Schichten 431 weisen unterschiedliche Betrachtungsrichtungsbereiche 421 auf. Mit anderen Worten, die einzelnen Schichten 431 können dazu verwendet werden, Abdunkelungen 412 zu erzeugen, die aus jeweils unterschiedlichen Betrachtungsrichtungsbereichen 421 wahrgenommen werden können, und die aus Richtungen, die außerhalb der jeweiligen Betrachtungsrichtungsbereiche 421 liegen, nicht wahrgenommen werden können. Die Vielzahl von Schichten 431 kann derart ausgebildet sein, dass für die möglichen Betrachtungswinkel eines bestimmten Auges 403 auf eine Blendquelle 401 zumindest durch eine Schicht 431 der Vielzahl von Schichten 431 eine Abdunkelung 412 erzeugt werden kann, die durch das bestimmte Auge 403 wahrgenommen wird (um die Blendquelle 401 abzudecken), jedoch durch das jeweils andere Auge 404 nicht wahrgenommen wird (um einen Phantom-Spot 402 zu vermeiden).

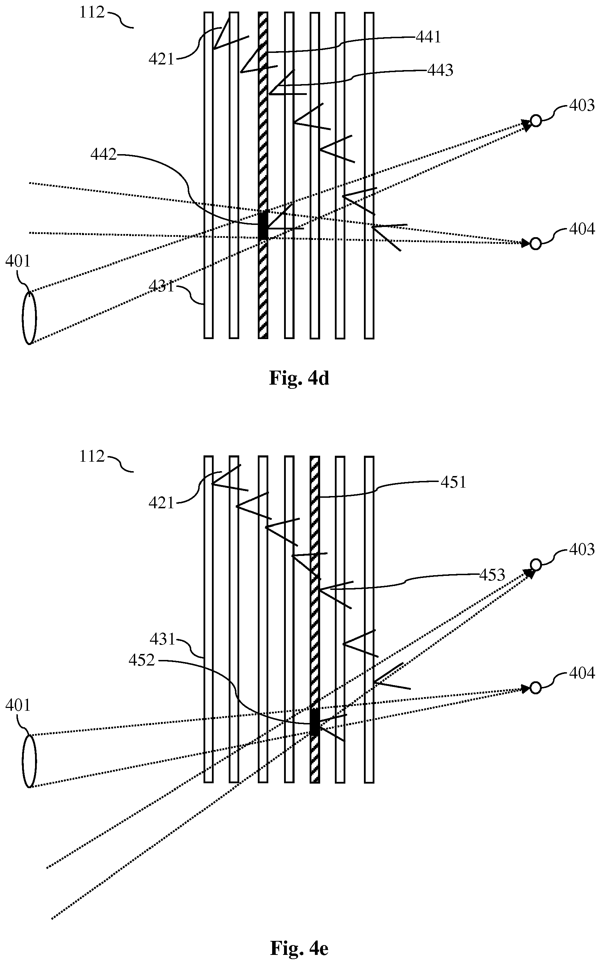

Eine derartige beispielhafte abdunkelbare Fläche 112 zur Erzeugung von Abdunkelungen 412, 442 für das rechte Auge 403 ist in Fig. 4d gezeigt. Die Blendquelle 401 kann durch eine Abdunkelung 442 in der abdunkelbaren Schicht 441 mit dem Betrachtungsrichtungsbereich 443 derart für das rechte Auge 403 abgedeckt werden, dass die Abdunkelung 442 für das linke Auge 404 außerhalb des Betrachtungsrichtungsbereichs 443 liegt, und somit kein Phantom-Spot 402 entsteht.

In analoger Weise kann eine abdunkelbare Fläche 112 bereitgestellt werden, die es ermöglicht, die Blendquelle 401 für das linke Auge 404 durch eine Abdunkelung 412, 452 abzudunkeln, die von dem rechten Auge 403 nicht wahrgenommen wird. Dies ist in Fig. 4e beispielhaft dargestellt. Durch die Abdunkelung 452 in Schicht 451 mit dem Betrachtungsrichtungsbereich 453 kann erreicht werden, dass die Lichtquelle 401 durch die Abdunkelung 452 für das linke Auge 404 abgedeckt wird, und dabei die Abdunkelung 452 für das rechte Auge 403 außerhalb des Betrachtungsrichtungsbereichs 453 liegt, so dass die Abdunkelung 452 für das rechte Auge 403 nicht sichtbar ist.

Die abdunkelbare Fläche 112 für das rechte Auge 403 und die abdunkelbare Fläche 112 für das linke Auge 404 können komplementäre Betrachtungsrichtungsbereiche aufweisen. Beispielsweise können die Betrachtungsrichtungsbereiche 421 der Schichten 431 der abdunkelbaren Flächen 112 an einer Achse durch einen Mittelpunkt einer Verbindung zwischen dem rechten Auge 403 und dem linken Auge 404 gespiegelt sein. Dabei verläuft die Achse senkrecht zu der Verbindung zwischen dem rechten Auge 403 und dem linken Auge 404.

Somit können bei einer abdunkelbaren Fläche oder Scheibe 112 mit einer Vielzahl von abdunkelbaren Schichten 431 mit jeweils unterschiedlichen Betrachtungsrichtungsbereichen 421 eine erste Schicht 441 und eine zweite Schicht 451 dazu verwendet werden, eine Lichtquelle 401 für jeweils ein erstes Auge 403 und ein zweites Auge 404 des Fahrers auszublenden. Insbesondere kann durch die erste Schicht 441 mit einem ersten Betrachtungsrichtungsbereich 443 eine erste Abdunkelung 442 erzeugt werden, die die Lichtquelle 401 für das erste Auge 403 abdunkelt, aber für das zweite Auge 404 nicht sichtbar ist. In ähnlicher Weise kann durch die zweite Schicht 451 mit einem zweiten Betrachtungsrichtungsbereich 453 eine zweite Abdunkelung 452 erzeugt werden, die die Lichtquelle 401 für das zweite Auge 404 abdunkelt, aber für das erste Auge 403 nicht sichtbar ist.

Eine Steuereinheit (z.B. die Steuereinheit 130 einer Blende 100) kann eingerichtet sein, eine erste Trajektorie zwischen Lichtquelle 401 und dem ersten Auge 403 und eine zweite Trajektorie zwischen Lichtquelle 401 und dem zweiten Auge 404 zu bestimmen (z.B. auf Basis von Bilddaten einer Frontkamera 121 und einer Rückkamera 122). Desweiteren kann die Steuereinheit eingerichtet sein, die erste Schicht 441 zur Erzeugung der ersten Abdunkelung 442 zu ermitteln und die zweite Schicht 451 zur Erzeugung der zweiten Abdunkelung 452 zu ermitteln. Desweiteren kann die Steuereinheit auf Basis der ermittelten ersten und zweiten Trajektorien, die Stellen für die erste und zweite Abdunkelung 442, 452 auf der ersten und zweiten Schicht 441, 451 zu bestimmen. So kann gewährleistet werden, dass die Blendwirkung der Lichtquelle 401 ohne Erzeugung von störenden Artefakten reduziert oder beseitigt wird.

Ein abdunkelbares Display 112 kann somit N Displayschichten 431 mit unterschiedlichen Betrachtungsrichtungsbereichen 421 umfassen. Bei den einzelnen Displayschichten 431 kann es sich um LC-Displayschichten handeln. Die Anzahl N der Displayschichten 431 kann von dem Augenabstand zwischen den Augen 403, 404 eines Fahrers abhängen. Desweiteren kann die Anzahl N von der Breite (in horizontaler Richtung) des abdunkelbaren Displays 112 abhängen. Beispielsweise können n = Truncate(Breite Display 112/ Augenabstand) Displayschichten 431 für jedes Auge 403, 404 verwendet werden, d.h. N=2n Displayschichten 431 für beide Augen 403, 404.

Jede LC-Displayschicht 431 kann so ausgelegt sein, dass in der Horizontalen der Betrachtungswinkel eine "scharfe Abrisskante" aufweist (d.h. eine scharfe Begrenzung des Betrachtungsrichtungsbereichs 421), sodass für einen passenden Raumwinkel die Blendquelle 401 für ein Auge 403 abgedeckt wird (durch eine Abdunkelung 442), diese Abdunkelung 442 auf dem Display 112 jedoch für das andere Auge 404 nicht als störender Phantom-Spot (oder Phantompunkt) 402 wahrgenommen werden kann. Durch die Schichtung von 2n solcher Displayschichten 431, die jeweils einen bestimmten Raumwinkelbereich 421 abdecken, können Phantom-Spots über die gesamte Breite des Displays 112 vermieden werden. In einem bevorzugten Beispiel umfasst das Display 112 N=2n=12 Schichten 431.

In Zusammenhang mit den Figuren 4d und 4e werden Displays 112 mit einer Vielzahl von Schichten 431 mit jeweils festen Betrachtungsrichtungsbereichen 521 beschrieben. Im Folgenden werden Schichten 431 mit örtlich stetig variierenden Betrachtungswinkeln oder Betrachtungsrichtungsbereichen 521 auf einer Schicht beschrieben. Wie gezeigt wird, kann durch die Anpassung der Betrachtungswinkel / Betrachtungsrichtungsbereiche in Abhängigkeit von der lateralen Position auf einer Schicht die Anzahl von Schichten 431 reduziert werden, die zur Vermeidung von Phantom-Spots erforderlich ist.

Figuren 5a und 5b zeigen beispielhafte Schichten 551, 541 eines abdunkelbaren, transparenten Displays 112 für das zweite Auge 404 und respektive für das erste Auge 403. Die Schichten 551, 541 weisen jeweils abdunkelbare Elemente mit unterschiedlichen Betrachtungsrichtungsbereichen 521 auf. Insbesondere verändern sich die Betrachtungsrichtungsbereiche 521 einer Schicht 551, 541 entlang der Breitenausrichtung der Schicht 551, 541. So können auch bei Verwendung von nur einer Schicht 551, 541 pro Auge 404, 403 Phantom-Spots 402 vermieden werden.

Dies ist beispielhaft in Fig. 5a dargestellt. Fig. 5a zeigt zwei Lichtquellen 401 an unterschiedlichen Positionen. Desweiteren zeigt Fig. 5a die Entwicklung der Betrachtungsrichtungsbereiche 521 der abdunkelbaren Elemente der Schicht 551 entlang der Breiten-Achse y der Schicht 551. Die Betrachtungsrichtungsbereiche 521 weisen jeweils eine Abrisskante oder Begrenzung (auch als Richtungsbereichsgrenze bezeichnet) 522 auf, die auf einen Mittelpunkt zwischen den Augen 403, 404 auf der Breiten-Achse y gerichtet ist. Durch diese Anordnung kann gewährleistet werden, dass die Lichtquellen 401 durch Abdunkelungen an den Stellen 512 auf der Schicht 551 für das zweite Auge 404 abgedeckt werden können. Der Betrachtungswinkel des ersten Auges 403 auf die Stellen 512 liegt jedoch außerhalb des Betrachtungsrichtungsbereichs 521 der Schicht 551 an diesen Stellen 512, so dass die Abdunkelungen für das erste Auge 403 nicht sichtbar sind.

In analoger Weise kann die Schicht 541 für das erste Auge 403 aufgebaut sein. Die Betrachtungsrichtungsbereiche 521 der Schicht 541 können gegenüber den Betrachtungsrichtungsbereichen 521 der Schicht 551 gespiegelt sein (insbesondere an der Achse x durch den Mittelpunkt zwischen den Augen 403, 404 und senkrecht zu der Achse y). Wie in Fig. 5b dargestellt können die Lichtquellen 401 durch Abdunkelungen an den Stellen 512 auf der Schicht 541 für das erste Auge 403 abgedeckt werden. Der Betrachtungswinkel des zweiten Auges 404 auf die Stellen 512 liegt jedoch außerhalb des Betrachtungsrichtungsbereichs 521 der Schicht 541 an diesen Stellen 512, so dass die Abdunkelungen für das zweite Auge 404 nicht sichtbar sind.

Eine Displayschicht 541, 551 (z.B. ein LCD-Display) eines abdunkelbaren Displays 112 kann somit kontinuierlich in y-Richtung variierende "scharfe Abrisskanten" 522 aufweisen. Eine LC-Displayschicht 541, 551 kann so ausgelegt sein, dass in der Horizontalen (d.h. in der x Achse) die Betrachtungswinkel eine scharfe Abrisskante aufweisen, so dass für den Raumwinkel einer Blendquelle 401 zu einem Auge 403, die Blendquelle 401 innerhalb des Betrachtungsrichtungsbereichs liegt (und damit durch eine Abdunkelung verdeckt werden kann), aber für den Raumwinkel der gleichen Blendquelle 401 zu dem anderen Auge 403, die Blendquelle 401 außerhalb des Betrachtungsrichtungsbereichs liegt (und damit die Abdunkelung nicht als störender Phantom-Spot 402 wahrgenommen wird).

Für das erste und zweite Auge 403, 404 können gleichartige Displayschichten 541, 551 verwendet werden, die jedoch um 180° zueinander verdreht sind.

Durch das Übereinanderlegen der beiden Displayschichten 541, 551 für das rechte Auge 403 und für das linke Auge 404 kann die Eliminierung von Phantom-Spots über die gesamte Breite des Displays realisiert werden.

Wie aus den Figuren 5a und 5b entnommen werden kann, kann eine Eliminierung der Phantom-Spots insbesondere dann gewährleistet werden, wenn der Mittelpunkt zwischen den Augen 403, 404 des Fahrers mit dem Zentrum der radial ausgerichteten Betrachtungswinkel-Abrisskanten 522 übereinstimmt. Die abdunkelbare Fläche 112 (oder eine zugehörige Steuereinheit) kann eingerichtet sein, eine Abweichung zwischen dem Mittelpunkt zwischen den Augen 403, 404 und dem Zentrum der radial ausgerichteten Betrachtungswinkel-Abrisskanten 522 zu ermitteln. Die Schichten 541, 551 können eingerichtet sein, die Betrachtungsrichtungsbereiche zu verändern (z.B. durch Anlegen einer OffsetSpannung). Insbesondere können die Schichten 541, 551 eingerichtet sein, das o.g. Zentrum in x und y Richtung, z.B. durch Anlegen von Offset-Spannung(en) an einzelne ansteuerbare Bereiche der Displays 541, 551, einzustellen. Im Betrieb kann so das Zentrum der Displays 541, 551 an die Position zwischen den Augen des Fahrers eingeregelt werden.

Die abdunkelbare Fläche 112 kann eine weitere Schicht umfassen, die ein oder mehrere Betrachtungsrichtungsbereiche aufweist, die entlang der gesamten Breite der Schicht die Blickrichtungen beider Augen 403, 404 umfassen. Dadurch kann gewährleistet werden, dass die abdunkelbare Fläche 112 abgedunkelt werden kann (für beide Augen 403, 404). Desweiteren kann eine solche weitere Schicht genutzt werden, um das Display 112 komplett schwarz zu schalten, um als Hintergrund für eine weitere darüber aufgebrachten, selbst leuchtende Display-Schicht (z.B. AMOLED-Technologie) zu dienen. Dadurch kann die Fläche als Monitor zur Darstellung von Informationen genutzt werden (in Abhängigkeit von der Fahrsituation).

Wie weiter oben dargelegt, kann eine Steuereinheit 130 der Blende 100 oder der Blendenvorrichtung eingerichtet sein, die Position von ein oder mehreren Abdunkelungen 412 auf der abdunkelbaren Fläche 112 zu ermitteln, so dass entsprechende ein oder mehrere Blendquellen 401 abgedunkelt werden. Insbesondere kann auf Basis der Bilddaten der Frontkamera 121 und/oder der Rückkamera 122 eine Licht-Trajektorie zwischen einer Blendquelle 401 und einem Auge 403 des Insassen ermittelt werden. Die Position der Abdunkelung 412 kann dann so bestimmt werden, dass die Abdunkelung in der ermittelten Licht-Trajektorie liegt, und damit die Blendquelle 401 für das Auge 403 ausblendet.

Dabei bewegen sich die Blendquelle 401, die Blende 100 und das Auge 403 des Insassen relativ zueinander, so dass die Position der Abdunkelung 412 typischerweise kontinuierlich neu ermittelt werden muss. Dabei bewegen sich Blendquellen 401 meist gleichmäßig und ohne hochfrequente Schwingungen im Raum. Die Bewegungen der Augen des Insassen erfolgen aufgrund aktiver Bewegungen des Insassen und/oder aufgrund von Beschleunigungen/Bewegungen des Fahrzeugs (z.B. verursacht durch Straßenunebenheiten, Kurvenfahrt etc.). Bewegungen der Augen des Insassen, die von Fahrzeugbeschleunigungen herrühren folgen zeitverzögert zu entsprechenden Beschleunigungen des Fahrzeugs.

Die Steuereinheit 130 kann eingerichtet sein, Daten von einem Gyro-/Beschleunigungssensor des Fahrzeugs zu empfangen. Beispielsweise kann ein Gyrosensor (z.B. der Gyrosensor 123) verwendet werden, um die Bewegung / Beschleunigung des Fahrzeugs zu erfassen. Der Beschleunigungssensor ist typischerweise starr mit dem Fahrzeug verbunden, so dass Beschleunigungen des Fahrzeugs unverzerrt und zeitnah erfasst werden können. Aus den erfassten Beschleunigungen des Fahrzeugs kann dann die Beschleunigung der Augen des Fahrers prädiziert werden. Die prädizierte Beschleunigung der Augen des Fahrers kann dazu verwendet werden, die Position der Augen des Fahrers zu prädizieren und die Position einer Abdunkelung 412 der prädizierten Position der Augen des Fahrers anzupassen.

Fig. 6 zeigt ein Blockdiagram einer beispielhaften Vorrichtung 600 zur Ermittlung der zeitlich und örtlich korrekten Position der ein oder mehreren Abdunkelungen 412 auf der abdunkelbaren Fläche 112 in Abhängigkeit von der aktuellen Position der Blendquelle 401, von der aktuellen Position der Augen 403, 404 und der aktuellen Beschleunigungssituation des Fahrzeugs (z.B. aufgrund von Fahrbahnunebenheiten oder Kurvenfahrt). Insbesondere umfasst die Vorrichtung 600 eine Prädiktionseinheit 610, die eingerichtet ist, eine Position des Auges des Insassen auf Basis von Bewegungsdaten 601 des Fahrzeugs zu prädizieren. Die Bewegungsdaten 601 des Fahrzeugs können von einem Gyrosensor bereitgestellt werden. Als weitere Eingangsgrößen für die Prädiktion können von der Rückkamera 122 erfasste Bilddaten 602 des Auges des Insassen und/oder die zuletzt ermittelte Position 603 des Auges des Insassen berücksichtigt werden. Aus diesen Daten kann eine zukünftige Augenposition 604 prädiziert werden. Die prädizierte zukünftige Augenposition 604 kann dann in einer Regelungseinheit 620 dazu verwendet werden, die Positionen der ein oder mehreren Abdunkelungen 412 auf der abdunkelbaren Fläche 112 so festzulegen, dass diese dann für die tatsächlich eintretende Augenposition passend sind. Dabei wird die Tatsache ausgenutzt, dass die Phase der Bewegung der Augenposition der anregenden Schwingung des Fahrzeugs "nacheilt". Damit kann der Zeitverlust, der typischerweise in der Regelstrecke durch Signalanalyse, Rechenschritte und Signallaufzeiten auftritt, zumindest zum Teil kompensiert werden, womit sich die Regelfrequenz bei gleicher Güte der Regelung verringern lässt.

Regelungstechnisch kann für die Strecke "Anregung Fahrzeug inkl. Gyro-/Beschleunigungssensor; Sitz; Fahrer; Augen; Abdunkelung auf der Blende" eine frequenzabhängige Übertragungscharakteristik oder Übertragungsfunktion analysiert werden. Damit lässt sich eine Regelung implementieren, die die Bewegung der Augen aufgrund der momentanen Beschleunigung des Fahrzeugs vorhersagen kann. Die Übertragungsfunktion zwischen den erfassten Bewegungsdaten 601 und der daraus resultierenden Veränderung der Position der Augen des Fahrers kann vorab bestimmt werden. Beispielsweise kann in einer Trainingssequenz (z.B. zu Beginn einer Fahrt) durch Auswertung der Signale 601 des Gyro-/Beschleunigungssensors und der Erfassung 602 der Augenposition die Übertragungsfunktion für den aktuellen Fahrer ermittelt werden, um dann die Regelungscharakteristik darauf abzustimmen. Insbesondere kann die Übertragungsfunktion in der Prädiktionseinheit 610 verwendet werden.

Im Folgenden werden weitere Funktionen einer Blende aufgeführt:
Der abdunkelbare Teil 112 kann auch in transparenter Form dazu verwendet werden, unangenehme Spiegelungen in der Windschutzscheibe 150 zu reduzieren.

Insbesondere kann der abdunkelbare Teil 112 eingerichtet sein, eintreffendes Licht zu polarisieren. Dies ist beispielhaft in Fig. 3 dargestellt. Fig. 3 zeigt einen Lichtstrahl 301 im Außenbereich des Fahrzeugs, der nicht polarisiert ist. Durch die Windschutzscheibe 150 eines Fahrzeugs wird typischerweise bereits eine partielle Polarisierung in vertikaler Richtung bewirkt. Das führt dazu, dass horizontal polarisiertes Licht 302 von der Windschutzscheibe 150 abprallt und partiell vertikal polarisiertes Licht 303 durch die Windschutzscheibe 150 in das Innere des Fahrzeugs dringt.

Der abdunkelbare Teil 112 der Blende 100 kann die gleiche Polarisierungsebene aufweisen wie die Windschutzscheibe 150. Dadurch kann die kombinierte Transparenz aus Windschutzscheibe 150 und abdunkelbaren Teil 112 maximiert werden. Mit anderen Worten, durch die Abstimmung der Polarisierungsebenen von Windschutzscheibe 150 und abdunkelbaren Teil 112 kann die Energie des Lichtes 304, welches den Fahrer erreicht, maximiert werden. In dem Fall, dass die abdunkelbare Schicht 112 eine LCD-Schicht umfasst, und die Windschutzscheibe relativ stark geneigt ist (wie in üblichen PKWs), kann beispielsweise ein Anteil von ca. 60% des Lichtes durch die LCD-Schicht treten, statt ca. 42 %, die ohne den Effekt der Vorpolarisation durch die Windschutzscheibe 150 auftreten würden. Dabei ergeben sich die 42 % aus ca. 50% Transmissionsverlust aufgrund der Polarisationswirkung der LCD-Schicht und zusätzlichen Reflexionsverlusten an den Grenzflächen vor und hinter der LCD-Schicht.
Durch die in diesem Dokument beschriebenen ein oder mehreren Fixpositionen kann gewährleistet werden, dass Crash-unverträgliche Stellungen der Blende 100 nur transient möglich sind. Bei den ein oder mehreren Fixpositionen kann es sich um eine möglichst sichere Stellungen der Blende 100 handeln. Wie oben dargelegt, kann der Ausklappwinkel der Blende 100, und damit die Position der Blende 100, über einen Sensor 123 ermittelt werden.
Die abdunkelbare Fläche 112 kann in mehreren Stufen oder ggf. auch stufenlos abgedunkelt werden. Dadurch können verschiedene Funktionsmodi für die Blende 100 bereitstellt werden. Eine transparente Fläche 112 kann zur Eliminierung von Reflexen verwendet werden; eine vollflächig und vollständig abgedunkelte Fläche 112 kann dazu verwendet werden, einen bestimmten Bereich auszublenden; durch eine einstellbare Transmission kann die Fläche 112 ähnlich wie eine Sonnenbrille verwendet werden; durch das Abdunkeln einzelner Punkte können dediziert Blendquellen ausgeblendet werden; und durch einen Abstufung der Transmission können Teilbereiche nach Bedarf gedämpft werden.
Durch die in diesem Dokument beschriebenen Blendenvorrichtungen kann die Blendwirkung von Blendquellen auf den Fahrer eines Fahrzeugs signifikant reduziert werden. Dadurch kann die Ermüdung des Fahrers reduziert und der Komfort für den Fahrer erhöht werden. Desweiteren führt dies zu einer Erhöhung der Sicherheit eines Fahrzeugs.

## Patentansprüche

1. Blendschutzvorrichtung (112), welche eingerichtet ist, selektiv Licht von einer Blendquelle (401) zumindest teilweise für ein Auge (403, 404) eines Betrachters zu blockieren; wobei die Blendschutzvorrichtung (112) mindestens eine erste lichtdurchlässige Schicht (431, 441) mit einer Vielzahl von Elementen umfasst, **dadurch gekennzeichnet, dass** die Lichtdurchlässigkeit der Vielzahl von Elementen separat veränderbar ist; wobei die Elemente der Vielzahl von Elementen jeweils einen Betrachtungsrichtungsbereich (421,443) aufweisen; wobei eine Reduzierung der Lichtdurchlässigkeit eines Elements bei Betrachtung mit einem Auge (403, 404) des Betrachters aus einer Richtung innerhalb des Betrachtungsrichtungsbereichs (421, 443) stärker wahrgenommen wird als bei Betrachtung aus einer Richtung außerhalb des Betrachtungsrichtungsbereichs (421, 443); wobei die Blendschutzvorrichtung (112) eingerichtet ist, ein erstes Element (442) aus der Vielzahl von Elementen der ersten Schicht (431, 441) auszuwählen, so dass
- das erste Element (442) auf einer Licht-Trajektorie zwischen der Blendquelle (401) und einem ersten Auge (403) des Betrachters liegt,
- die Licht-Trajektorie zwischen der Blendquelle (401) und dem ersten Auge (403) innerhalb des Betrachtungsrichtungsbereichs (421, 443) des ersten Elements (442) liegt, und
- eine Licht-Trajektorie zwischen der Blendquelle (402) und einem zweiten Auge (404) des Betrachters außerhalb des Betrachtungsrichtungsbereichs (421, 443) des ersten Elements (442) liegt.

2. Blendschutzvorrichtung (112) gemäß Anspruch 1, wobei die Blendschutzvorrichtung (112) eine zweite lichtdurchlässige Schicht (431, 451) mit einer Vielzahl von Elementen umfasst; wobei die Blendschutzvorrichtung (112) eingerichtet ist, ein zweites Element (452) aus der Vielzahl von Elementen der zweiten Schicht (431, 451) auszuwählen, so dass
- das zweite Element (452) auf einer Licht-Trajektorie zwischen der Blendquelle (401) und dem zweiten Auge (404) des Betrachters liegt,
- die Licht-Trajektorie zwischen der Blendquelle (401) und dem zweiten Auge (404) innerhalb des Betrachtungsrichtungsbereichs (421, 453) des zweiten Elements (452) liegt; und
- eine Licht-Trajektorie zwischen der Blendquelle (402) und dem ersten Auge (403) des Betrachters außerhalb des Betrachtungsrichtungsbereichs (421, 453) des zweiten Elements (452) liegt.

3. Blendschutzvorrichtung (112) gemäß Anspruch 2, wobei
- ein Betrachtungsrichtungsbereich (421) eine Richtungsbereichsgrenze (522) aufweist; und
- die Richtungsbereichsgrenzen (522) der Betrachtungsrichtungsbereiche (421, 453) der zweiten Schicht (431, 451) zu den Richtungsbereichsgrenzen (522) der Betrachtungsrichtungsbereiche (421, 443) der ersten Schicht (431, 441) spiegelsymmetrisch zueinander sind.

4. Blendschutzvorrichtung (112) gemäß einem vorhergehenden Anspruch, wobei die Blendschutzvorrichtung (112) eine Vielzahl von Schichten (431) mit jeweils einer Vielzahl von Elementen umfasst; wobei die Betrachtungsrichtungsbereiche (421) der Elemente von zwei unterschiedlichen Schichten (431) der Vielzahl von lichtdurchlässigen Schichten (431) unterschiedlich sind; wobei die Blendschutzvorrichtung (112) eingerichtet ist, in Abhängigkeit von den Betrachtungsrichtungsbereichen (421) die erste Schicht (441) aus der Vielzahl von Schichten (431) auszuwählen.

5. Blendschutzvorrichtung (112) gemäß einem vorhergehenden Anspruch, wobei sich die Betrachtungsrichtungsbereiche (421) der Elemente entlang einer Flächenachse der ersten lichtdurchlässigen Schicht (431, 441) verändern.

6. Blendschutzvorrichtung (112) gemäß einem vorhergehenden Anspruch, wobei die Blendschutzvorrichtung (112) umfasst,
- ein oder mehrere Schichten (431, 441) mit Elementen, die eingerichtet sind, durch Reduzierung der Lichtdurchlässigkeit das Licht von ein oder mehreren Blendquellen (401) für das erste Auge (403) zumindest teilweise zu blockieren, so dass die reduzierte Lichtdurchlässigkeit für das zweite Auge (404) nicht substantiell wahrnehmbar ist; und
- ein oder mehrere Schichten (431, 451) mit Elementen, die eingerichtet sind, durch Reduzierung der Lichtdurchlässigkeit das Licht von den ein oder mehreren Blendquellen (401) für das zweite Auge (404) zumindest teilweise zu blockieren, so dass die reduzierte Lichtdurchlässigkeit für das erste Auge (403) nicht substantiell wahrnehmbar ist.

7. Blendschutzvorrichtung (112) gemäß Anspruch 6, wobei die Blendschutzvorrichtung (112) umfasst, eine Abdunkelungs-Schicht (431) mit Elementen, die eingerichtet sind, durch Reduzierung der Lichtdurchlässigkeit das Licht von den ein oder mehreren Blendquellen (401) für das erste Auge (403) und für das zweite Auge (404) zumindest teilweise zu blockieren.

8. Blendschutzvorrichtung (112) gemäß Anspruch 7, wobei
- die Blendschutzvorrichtung (112) ein oder mehrere selbst-leuchtende Displayschichten umfasst; und
- die Blendschutzvorrichtung (112) eingerichtet ist, mittels der ein oder mehreren selbst-leuchtenden Displayschichten Informationen auf der Abdunkelungs-Schicht (431) darzustellen.

9. Blendschutzvorrichtung (112) nach einem der vorhergehenden Ansprüche, welche eingerichtet ist, selektiv Licht von einer Blendquelle (401) zumindest teilweise für ein Auge (403, 404) eines Betrachters zu blockieren; wobei die Blendschutzvorrichtung (112) eine Vielzahl von lichtdurchlässigen Schichten (431, 441) mit jeweils einer Vielzahl von Elementen umfasst; wobei die Lichtdurchlässigkeit der Vielzahl von Elementen separat veränderbar ist; wobei die Elemente der Vielzahl von Elementen jeweils einen Betrachtungsrichtungsbereich (421,443) aufweisen; wobei eine Reduzierung der Lichtdurchlässigkeit eines Elements bei Betrachtung mit einem Auge (403, 404) des Betrachters aus einer Richtung innerhalb des Betrachtungsrichtungsbereichs (421) stärker wahrgenommen wird als bei Betrachtung aus einer Richtung außerhalb des Betrachtungsrichtungsbereichs (421); wobei die Betrachtungsrichtungsbereiche (421) der Elemente von zwei unterschiedlichen Schichten (431, 441) der Vielzahl von lichtdurchlässigen Schichten (431, 441) unterschiedlich sind.

10. Blendschutzvorrichtung (112) gemäß Anspruch 9, wobei die Blendschutzvorrichtung (112) eingerichtet ist, in Abhängigkeit von einer Position der Blendquelle (401) eine erste Schicht (441) der Vielzahl von lichtdurchlässigen Schichten (431, 441) auszuwählen, so dass sich die Blendquelle (401) für ein erstes Auge (403) des Betrachters innerhalb des Betrachtungsrichtungsbereichs (421) von zumindest einem Element der Vielzahl von Elementen der ersten Schicht (441) befindet, und so dass sich die Blendquelle (401) für ein zweites Auge (404) des Betrachters außerhalb des Betrachtungsrichtungsbereichs (421) des zumindest einen Elements der Vielzahl von Elementen der ersten Schicht (441) befindet.

11. Blendschutzvorrichtung (112) nach einem der vorhergehenden Ansprüche, welche eingerichtet ist, selektiv Licht von einer Blendquelle (401) zumindest teilweise für ein Auge (403, 404) eines Betrachters zu blockieren; wobei die Blendschutzvorrichtung (112) mindestens eine erste lichtdurchlässige Schicht (431, 441) mit einer Vielzahl von Elementen umfasst; wobei die Lichtdurchlässigkeit der Vielzahl von Elementen separat veränderbar ist; wobei die Elemente der Vielzahl von Elementen jeweils einen Betrachtungsrichtungsbereich (421) aufweisen; wobei eine Reduzierung der Lichtdurchlässigkeit eines Elements bei Betrachtung mit einem Auge (403, 404) des Betrachters aus einer Richtung innerhalb des Betrachtungsrichtungsbereichs (421) stärker wahrgenommen wird als bei Betrachtung aus einer Richtung außerhalb des Betrachtungsrichtungsbereichs (421); wobei sich die Betrachtungsrichtungsbereiche (421) der Elemente entlang einer Flächenachse der ersten lichtdurchlässigen Schicht (431, 441) verändern.

12. Blendschutzvorrichtung (112) gemäß Anspruch 11, wobei
- ein Betrachtungsrichtungsbereich (421) eine Richtungsbereichsgrenze (522) aufweist; und
- die Richtungsbereichsgrenzen (522) der Betrachtungsrichtungsbereiche (421) der Elemente entlang der Flächenachse der ersten lichtdurchlässigen Schicht (431, 441) auf einen gemeinsamen Punkt auf einer Querachse senkrecht zur Flächenachse der ersten lichtdurchlässigen Schicht (431, 441) gerichtet sind.

13. Blendschutzvorrichtung (112) gemäß Anspruch 12, wobei der gemeinsame Punkt einem Mittelpunkt auf einer Achse zwischen einem ersten Auge (403) und einem zweiten Auge (404) des Betrachters entspricht.

14. Blendschutzvorrichtung (112) gemäß einem der Ansprüche 12 bis 13, wobei die Blendschutzvorrichtung (112) eingerichtet ist,
- einen Fokalpunkt zu ermitteln; und
- die Richtungsbereichsgrenzen (522) der Betrachtungsrichtungsbereiche (421) der Elemente entlang der Flächenachse der ersten lichtdurchlässigen Schicht (431, 441) derart zu verändern, dass die Richtungsbereichsgrenzen (522) auf den Fokalpunkt gerichtet sind.

15. Blendschutzvorrichtung (112) gemäß Anspruch 14, wobei die Blendschutzvorrichtung (112) eingerichtet ist, mittels eines Regelkreises die Richtungsbereichsgrenzen (522) in Bezug auf einen sich verändernden Fokalpunkt zu regeln.

16. Blendschutzvorrichtung (112) gemäß einem vorhergehenden Anspruch, umfassend mindestens eine lichtdurchlässige Schicht (431) mit einer Vielzahl von Elementen; wobei die Lichtdurchlässigkeit der Vielzahl von Elementen separat veränderbar ist; wobei die Blendschutzvorrichtung (112) eingerichtet ist,
- Daten (601) bzgl. einer Beschleunigung des Fahrzeugs zu ermitteln;
- unter Berücksichtigung der Daten (601) bzgl. der Beschleunigung des Fahrzeugs, eine Position des Auges (403) des Betrachters zu prädizieren;
- ein Element (442) aus der Vielzahl von Elementen der lichtdurchlässigen Schicht (431) auszuwählen, so dass das Element (442) auf einer Licht-Trajektorie zwischen der Blendquelle (401) und der prädizierten Position des Auges (403) des Betrachters liegt; und
- die Lichtdurchlässigkeit des ausgewählten Elements (442) zu reduzieren.

17. Blendschutzvorrichtung (100, 112) gemäß einem vorhergehenden Anspruch, welche eingerichtet ist, bewegbar im Innenraum eines Fahrzeugs angeordnet zu werden, so dass die Blendschutzvorrichtung (100,112) in eine heruntergeklappte Position und in eine hochgeklappte Position gebracht werden kann, wobei die Blendschutzvorrichtung (100, 112) in der heruntergeklappten Position die Sicht eines Insassen des Fahrzeugs auf einen Teil einer Scheibe des Fahrzeugs bedeckt; wobei die Blendschutzvorrichtung (100) umfasst,
- einen Trägerteil (111), durch den ein Basisanteil einer Blendenfläche (102) der Blendschutzvorrichtung (100) bereitgestellt wird; und
- einen beweglichen Teil (112), der beweglich in der Blendschutzvorrichtung (100, 112) angeordnet ist, und der eingerichtet ist, die Blendenfläche (102) der Blendschutzvorrichtung (100,112) über den Basisanteil hinaus zu vergrößern.

18. Blendschutzvorrichtung (100, 112) gemäß einem vorhergehenden Anspruch, welche eingerichtet ist, bewegbar im Innenraum eines Fahrzeugs angeordnet zu werden, so dass die Blendschutzvorrichtung (100, 112) in eine heruntergeklappte Position und in eine hochgeklappte Position gebracht werden kann, wobei die Blendschutzvorrichtung (100, 112) in der heruntergeklappten Position die Sicht eines Insassen des Fahrzeugs auf einen Teil einer Scheibe des Fahrzeugs bedeckt; wobei
- die Blendschutzvorrichtung (100, 112) eine Blendenfläche (102) umfasst;
- die Blendenfläche (102) eine Krümmung aufweist; und
- in der heruntergeklappten Position der Blendschutzvorrichtung (100, 112) die Krümmung in Bezug auf die Scheibe des Fahrzeugs konvex ist.

19. Blendschutzvorrichtung (100, 112) gemäß einem vorhergehenden Anspruch, welche eingerichtet ist, bewegbar im Innenraum eines Fahrzeugs angeordnet zu werden, so dass die Blendschutzvorrichtung (100, 112) in eine heruntergeklappte Position und in eine hochgeklappte Position gebracht werden kann, wobei die Blendschutzvorrichtung (100, 112) in der heruntergeklappten Position die Sicht eines Insassen des Fahrzeugs auf einen Teil einer Frontscheibe des Fahrzeugs bedeckt; wobei die Blendschutzvorrichtung (100, 112) umfasst,
- eine erste Blendenfläche (102), die eine lichtdurchlässige Fläche (112) aufweist, dessen Lichtdurchlässigkeit veränderbar ist; und
- eine nicht-transparente Blendenfläche (171), die bewegbar angeordnet ist, und die eingerichtet ist, in einer ersten Position die erste Blendenfläche (102) zumindest teilweise zu bedecken, und in einer zweiten Position eine Seitenscheibe des Fahrzeugs zu bedecken, wenn die Blendschutzvorrichtung (100, 112) in der heruntergeklappten Position ist.

## Claims

1. A glare shield device (112), which is designed to selectively block light from a source of glare (401), at least partially for an eye (403, 404) of a viewer, wherein the glare shield device (112) comprises at least a first translucent layer (431, 441) having a multiplicity of elements, **characterised in that** the translucency of the multiplicity of elements can be changed separately, wherein the elements of the multiplicity of elements each have a viewing direction range (421, 443), wherein a reduction in the translucency of an element is perceived more strongly when viewing with an eye (403, 404) of the viewer from a direction within the viewing direction range (421, 443) than when viewing from a direction outside the viewing direction range (421, 443), wherein the glare shield device (112) is designed to select a first element (442) from the multiplicity of elements of the first layer (431, 441), such that
- the first element (442) lies on a light trajectory between the source of glare (401) and a first eye (403) of the viewer,
- the light trajectory lies between the source of glare (401) and the first eye (403) within the viewing direction range (421, 443) of the first element (442), and
- a light trajectory between the source of glare (402) and a second eye (404) of the viewer lies outside the viewing direction range (421, 443) of the first element (442).

2. A glare shield device (112) according to claim 1, wherein the glare shield device (112) comprises a second translucent layer (431, 451) having a multiplicity of elements, wherein the glare shield device (112) is designed to select a second element (452) from the multiplicity of elements of the second layer (431, 451), such that
- the second element (452) lies on a light trajectory between the source of glare (401) and the second eye (404) of the viewer,
- the light trajectory lies between the source of glare (401) and the second eye (404) within the viewing direction range (421, 453) of the second element (452), and
- a light trajectory between the source of glare (402) and the first eye (403) of the viewer lies outside the viewing direction range (421, 453) of the second element (452).

3. A glare shield device (112) according to claim 2, wherein
- a viewing direction range (421) has a direction range boundary (522), and
- the direction range boundaries (522) of the viewing direction ranges (421, 453) of the second layer (431, 451) are mirror-symmetrical with respect to the direction range boundaries (522) of the viewing direction ranges (421, 443) of the first layer (431, 441).

4. A glare shield device (112) according to any preceding claim, wherein the glare shield device (112) comprises a multiplicity of layers (431), each having a multiplicity of elements, wherein the viewing direction ranges (421) of the elements of two different layers (431) of the multiplicity of light-permeable layers (431) are different, wherein the glare shield device (112) is designed to select the first layer (441) from the multiplicity of layers (431) in dependence upon the viewing direction ranges (421).

5. A glare shield device (112) according to any preceding claim, wherein the viewing direction ranges (421) of the elements change along a surface axis of the first translucent layer (431, 441).

6. A glare shield device (112) according to any preceding claim, wherein the glare shield device (112) comprises:
- one or more layers (431, 441) having elements which are designed to at least partially block the light from one or more sources of glare (401) for the first eye (403) by reducing the translucency, such that the reduced translucency is substantially imperceptible for the second eye (404); and
- one or more layers (431, 451) having elements which are designed to at least partially block the light from the one or more sources of glare (401) for the second eye (404) by reducing the translucency, such that the reduced translucency is substantially imperceptible for the first eye (403).

7. A glare shield device (112) according to claim 6, wherein the glare shield device (112) comprises a darkening layer (431) having elements which are designed to at least partially block the light from the one or more sources of glare (401) for the first eye (403) and for the second eye (404) by reducing the translucency.

8. A glare shield device (112) according to claim 7, wherein
- the glare shield device (112) comprises one or more self-illuminating display layers, and
- the glare shield device (112) is designed to display information on the darkening layer (431) by means of the one or more self-illuminating display layers.

9. A glare shield device (112) according to any one of the preceding claims, which glare shield device is designed to selectively block light from a source of glare (401) at least partially for an eye (403, 404) of a viewer, wherein the glare shield device (112) comprises a multiplicity of translucent layers (431, 441), each having a multiplicity of elements, wherein the translucency of the multiplicity of elements can be changed separately, wherein the elements of the multiplicity of elements each have a viewing direction range (421, 443), wherein a reduction in the translucency of an element is perceived more strongly when viewing with an eye (403, 404) of the viewer from a direction within the viewing direction range (421) than when viewing from a direction outside the viewing direction range (421), wherein the viewing direction ranges (421) of the elements of two different layers (431, 441) of the multiplicity of translucent layers (431, 441) are different.

10. A glare shield device (112) according to claim 9, wherein the glare shield device (112) is designed to select a first layer (441) of the multiplicity of translucent layers (431, 441) in dependence upon a position of the source of glare (401), such that the source of glare (401) for a first eye (403) of the viewer is located within the viewing direction range (421) of at least one element of the multiplicity of elements of the first layer (441), and such that the source of glare (401) for a second eye (404) of the viewer is located outside the viewing direction range (421) of the at least one element of the multiplicity of elements of the first layer (441).

11. A glare shield device (112) according to any one of the preceding claims, which glare shield device is designed to selectively block light from a source of glare (401) at least partially for an eye (403, 404) of a viewer, wherein the glare shield device (112) comprises at least a first translucent layer (431, 441) having a multiplicity of elements, wherein the translucency of the multiplicity of elements can be changed separately, wherein the elements of the multiplicity of elements each have a viewing direction range (421), wherein a reduction in the translucency of an element is perceived more strongly when viewing with an eye (403, 404) of the viewer from a direction within the viewing direction range (421) than when viewing from a direction outside the viewing direction range (421), wherein the viewing direction ranges (421) of the elements change along a surface axis of the first translucent layer (431, 441).

12. A glare shield device (112) according to claim 11, wherein
- a viewing direction range (421) has a direction range boundary (522), and
- the direction range boundaries (522) of the viewing direction ranges (421) of the elements along the surface axis of the first translucent layer (431, 441) are directed towards a common point on a transverse axis perpendicular with respect to the surface axis of the first translucent layer (431, 441).

13. A glare shield device (112) according to claim 12, wherein the common point corresponds to a centre point on an axis between a first eye (403) and a second eye (404) of the viewer.

14. A glare shield device (112) according to either one of claims 12 or 13, wherein the glare shield device (112) is designed
- to determine a focal point, and
- to change the direction range boundaries (522) of the viewing direction ranges (421) of the elements along the surface axis of the first translucent layer (431, 441), in such a way that the direction range boundaries (522) are directed towards the focal point.

15. A glare shield device (112) according to claim 14, wherein the glare shield device (112) is designed to control the direction range boundaries (522) with respect to a changing focal point by means of a control loop.

16. A glare shield device (112) according to any preceding claim, comprising at least one translucent layer (431) having a multiplicity of elements, wherein the translucency of the multiplicity of elements can be changed separately, wherein the glare shield device (112) is designed:
- to determine data (601) relating to an acceleration of the vehicle;
- to predict a position of the eye (403) of the viewer under consideration of the data (601) relating to the acceleration of the vehicle;
- to select an element (442) from the multiplicity of elements of the translucent layer (431), such that the element (442) lies on a light trajectory between the source of glare (401) and the predicted position of the eye (403) of the viewer; and
- to reduce the light translucency of the selected element (442).

17. A glare shield device (100, 112) according to any preceding claim, which glare shield device is designed to be arranged movably in the interior of a vehicle, such that the glare shield device (100, 112) can be brought into a folded-down position and into a folded-up position, wherein the glare shield device (100, 112) in the folded-down position conceals the view of an occupant of the vehicle of part of a window of the vehicle, wherein the glare shield device (100) comprises:
- a carrier part (111), by which a base portion of a glare shield area (102) of the glare shield device (100) is provided; and
- a movable part (112), which is arranged movably in the glare shield device (100, 112) and which is designed to increase the glare shield area (102) of the glare shield device (100, 102) beyond the base portion.

18. A glare shield device (100, 112) according to any preceding claim, which glare shield device is designed to be arranged movably in the interior of a vehicle, such that the glare shield device (100, 112) can be brought into a folded-down position and into a folded-up position, wherein the glare shield device (100, 112) in the folded-down position conceals the view of an occupant of the vehicle of part of a window of the vehicle, wherein
- the glare shield device (100, 112) comprises a glare shield area (102),
- the glare shield area (102) has a curvature, and
- in the folded-down position of the glare shield device (100, 112), the curvature is convex in relation to the window of the vehicle.

19. A glare shield device (100, 112) according to any preceding claim, which glare shield device is designed to be arranged movably in the interior of a vehicle, such that the glare shield device (100, 112) can be brought into a folded-down position and into a folded-up position, wherein the glare shield device (100, 112) in the folded-down position conceals the view of an occupant of the vehicle of part of a front windshield of the vehicle, wherein the glare shield device (100, 112) comprises:
- a first glare shield area (102), which has a translucent area (112), the translucency of which can be changed; and
- a non-transparent glare shield area (171), which is arranged movably and which is designed to at least partially cover the first glare shield area (102) in a first position, and to cover a side window of the vehicle in a second position if the glare shield device (100, 112) is in the folded-down position.

## Revendications

1. Dispositif de protection anti-éblouissement (112) susceptible de bloquer sélectivement de la lumière provenant d'une source d'éblouissement (401), au moins partiellement pour un oeil (403, 404) d'un observateur, le dispositif de protection anti-éblouissement (112) comprenant au moins une première couche perméable à la lumière (431, 441) comportant un ensemble d'éléments,
**caractérisé en ce que**
la perméabilité à la lumière des éléments de l'ensemble d'éléments peut être modifiée indépendamment, les éléments de l'ensemble d'éléments comportant chacun une zone de direction d'observation (421, 443), la réduction de la perméabilité à la lumière d'un élément lors de l'observation avec un oeil (403, 404) de l'observateur à partir d'une direction située dans la zone de direction d'observation (421, 443) étant assurée plus fortement que lors d'une observation à partir d'une direction située à l'extérieur de la zone de direction d'observation (421, 443), le dispositif de protection anti-éblouissement (112) étant susceptible de permettre de choisir un premier élément (442) parmi l'ensemble d'éléments de la première couche (431, 441) de sorte que :
- le premier élément (442) soit situé sur la trajectoire de la lumière entre la source d'éblouissement (401) et un premier oeil (403) de l'observateur,
- la trajectoire de la lumière entre la source d'éblouissement (401) et le premier oeil (403) soit située dans la zone de direction d'observation (421, 443) du premier élément (442), et
- la trajectoire de la lumière entre la source d'éblouissement (402) et le second oeil (404) de l'observateur soit située à l'extérieur de la zone de direction d'observation (421, 443) du premier élément (442).

2. Dispositif de protection anti-éblouissement (112) conforme à la revendication 1, comportant une seconde couche perméable à la lumière (431, 451) ayant un ensemble d'éléments, le dispositif de protection anti-éblouissement (112) étant susceptible de sélectionner un second élément (452) parmi l'ensemble d'éléments de la seconde couche (431, 451) de sorte que :
- le second élément (452) soit situé sur la trajectoire de la lumière entre la source d'éblouissement (401) et le second oeil (404) de l'observateur,
- la trajectoire de la lumière entre la source d'éblouissement (401) et le second oeil (404) soit située dans la zone de direction d'observation (421, 453) du second élément (452), et
- la trajectoire de la lumière entre la source d'éblouissement (402) et le premier oeil (403) de l'observateur soit située à l'extérieur de la zone de direction d'observation (421, 453) du second élément (452).

3. Dispositif de protection anti-éblouissement (112) conforme à la revendication 2,
dans lequel :
- une zone de direction d'observation (421) comporte une limite de zone de direction (522), et
- les limites de zones de direction (522) des zones de direction d'observation (421, 453) de la seconde couche (431, 451) présentent une symétrie de miroir avec les limites de zones de direction (522) des zones de direction d'observation (421, 443) de la première couche (431, 441).

4. Dispositif de protection anti-éblouissement (112) conforme à l'une des revendications précédentes, comprenant un ensemble de couches (431) ayant chacune un ensemble d'éléments, dans lequel les zones de direction d'observation (421) des éléments de deux couches (431) différentes de l'ensemble de couches perméables à la lumière (431) sont différentes, le dispositif de protection anti-éblouissement (112) étant susceptible de choisir une première couche (441) parmi l'ensemble de couches (431) en fonction des zones de direction d'observation (421).

5. Dispositif de protection anti-éblouissement (112) conforme à l'une des revendications précédentes,
dans lequel les zones de direction d'observation (421) des éléments varient le long de l'axe de surface de la première couche perméable à la lumière (431, 441).

6. Dispositif de protection anti-éblouissement (112) conforme à l'une des revendications précédentes, comprenant :
- une ou plusieurs couche(s) (431, 441) comportant des éléments susceptibles de bloquer, au moins partiellement, par réduction de la perméabilité à la lumière, la lumière provenant d'une ou de plusieurs source(s) d'éblouissement (401) pour le premier oeil (403) de sorte que la réduction de la perméabilité à la lumière ne soit pas notablement perceptible par le second oeil (404), et
- une ou plusieurs couche(s) (431, 451) comportant des éléments susceptibles de bloquer au moins partiellement par réduction de la perméabilité à la lumière la lumière provenant de la ou des source(s) d'éblouissement (401) pour le second oeil (404) de sorte que la réduction de la perméabilité à la lumière ne soit pas notablement perceptible par le premier oeil (403).

7. Dispositif de protection anti-éblouissement (112) conforme à la revendication 6, comprenant une couche d'assombrissement (431) comportant des éléments susceptibles de bloquer au moins partiellement, par réduction de la perméabilité à la lumière, la lumière provenant de la ou des source(s) d'éblouissement (401) pour le premier oeil (403) et pour le second oeil (404).

8. Dispositif de protection anti-éblouissement (112) conforme à la revendication 7, dans lequel :
- le dispositif de protection anti-éblouissement (112) comporte une ou plusieurs couche(s) d'affichage auto-éclairante(s), et
- le dispositif de protection anti-éblouissement (112) est susceptible, d'afficher des informations sur la couche d'assombrissement (431) au moyen de la ou des couche(s) d'affichage auto-éclairante(s).

9. Dispositif de protection anti-éblouissement (112) conforme à l'une des revendications précédentes susceptible de bloquer sélectivement de la lumière provenant d'une source d'éblouissement (401) au moins partiellement pour un oeil (403, 404) d'un observateur, le dispositif de protection anti-éblouissement (112) comprenant un ensemble de couches perméables à la lumière (431, 441) comportant chacune un ensemble d'éléments, la perméabilité à la lumière des éléments de l'ensemble d'éléments pouvant être modifiées indépendamment, les éléments de l'ensemble d'éléments comportant chacun une zone de direction d'observation (421, 443), lors d'une observation avec un oeil (403, 404) de l'observateur une réduction de la perméabilité à la lumière d'un élément, étant perçue plus intensément à partir d'une direction située dans la zone d'observation (421) que lors d'une observation à partir d'une direction située à l'extérieur de la zone de direction d'observation (421), les zones de direction d'observation (421) des éléments de deux couches différentes (431, 441) de l'ensemble de couches perméables à la lumière étant différentes (431, 441).

10. Dispositif de protection anti-éblouissement (112) conforme à la revendication 9, susceptible, en fonction de la position de la source d'éblouissement (401) de choisir une première couche (441) parmi l'ensemble de couches perméables à la lumière (431, 441) de sorte que la source d'éblouissement (401) soit située, pour un premier oeil (403) de l'observateur dans la zone de direction d'observation (421) d'au moins un élément de l'ensemble d'éléments de la première couche (441) et de sorte que la source d'éblouissement (401) soit située, pour le second oeil (404) de l'observateur à l'extérieur de la zone de direction d'observation (421) de l'élément de l'ensemble d'éléments de la première couche (441).

11. Dispositif de protection anti-éblouissement (112) conforme à l'une des revendications précédentes, susceptible de bloquer sélectivement de la lumière provenant d'une source d'éblouissement (401) au moins partiellement pour un oeil (403, 404) d'un observateur, le dispositif de protection anti-éblouissement (112) comprenant au moins une première couche perméable à la lumière (431, 441) comportant un ensemble d'éléments, la perméabilité à la lumière des éléments de l'ensemble d'éléments pouvant être modifiée indépendamment, les éléments de l'ensemble d'éléments comportant chacun une zone de direction d'observation (421), la réduction de la perméabilité à la lumière d'un élément étant perçue plus fortement lors d'une observation avec un oeil (403, 404) de l'observateur à partir d'une direction située dans la zone de direction d'observation (421) que lors d'une observation à partir d'une direction située à l'extérieur de la zone de direction d'observation (421), les zones de direction d'observation (421) des éléments se modifiant le long de l'axe de la surface de la première couche perméable à la lumière (431, 441).

12. Dispositif de protection anti-éblouissement (112) conforme à la revendication 11, dans lequel :
- une zone de direction d'observation (421) comporte une limite de zone de direction (522), et
- les limites de zone de direction (522) des zones de direction d'observation (421) des éléments étant orientées le long de l'axe de surface de la première couche perméable à la lumière (431, 441) vers un point commun situé sur un axe transversal perpendiculaire à l'axe de surface de la première couche perméable à la lumière (431, 441).

13. Dispositif de protection anti-éblouissement (112) conforme à la revendication 12, dans lequel le point commun correspond au centre de l'axe entre le premier oeil (403) et le second oeil (404) de l'observateur.

14. Dispositif de protection anti-éblouissement (112) conforme à l'une des revendications 12 et 13 susceptible :
- de déterminer un point focal, et
- de modifier les limites de zones de direction (522) des zones de direction d'observation (421) des éléments le long de l'axe de surface de la première couche perméable à la lumière (431, 441) de sorte que les limites de zones de direction (522) soient orientées vers le point focal.

15. Dispositif de protection anti-éblouissement (112) conforme à la revendication 14, susceptible de réguler au moyen d'un circuit de régulation les limites de zones de direction (522) en fonction d'un point focal variable.

16. Dispositif de protection anti-éblouissement (112) conforme à l'une des revendications précédentes, comprenant au moins une couche perméable à la lumière (431) comportant un ensemble d'éléments, la perméabilité à la lumière des éléments de l'ensemble d'éléments pouvant être modifié indépendamment, le dispositif de protection anti-éblouissement (112) étant susceptible :
- de déterminer des données (601) concernant une accélération du véhicule,
- en prenant en considération les données (601) concernant l'accélération du véhicule de prédire la position de l'oeil (403) de l'utilisateur,
- de choisir un élément (442) parmi l'ensemble d'éléments de la couche perméable à la lumière (431) de sorte que cet élément (442) soit situé sur la trajectoire de la lumière entre la source d'éblouissement (401) et la position prédite de l'oeil (403) de l'utilisateur, et
- de réduire la perméabilité à la lumière de l'élément (442) choisi.

17. Dispositif de protection anti-éblouissement (100, 112) conforme à l'une des revendications précédentes, susceptible d'être monté mobile dans l'habitacle du véhicule de sorte qu'il puisse être positionné dans une position basculée vers le bas et dans une position basculée vers le haut, dans la position basculée vers le bas le dispositif de protection anti-éblouissement (100, 112) couvrant la vue d'un occupant du véhicule sur une partie d'une vitre de ce véhicule, le dispositif de protection anti-éblouissement (100) comprenant :
- une partie de support (111) permettant de fournir une partie de base d'une surface formant écran anti-éblouissement (102) du dispositif de protection anti-éblouissement (100),
- une partie mobile (112) qui est montée mobile dans le dispositif de protection anti-éblouissement (100, 112) et qui est susceptible d'augmenter la surface formant écran anti-éblouissement (102) du dispositif de protection anti-éblouissement (100, 112) sur la partie de base.

18. Dispositif de protection anti-éblouissement (100, 112) conforme à l'une des revendications précédentes, susceptible d'être monté mobile dans l'habitacle d'un véhicule de sorte qu'il puisse être positionné dans une position basculée vers le bas et dans une position basculée vers le haut, dans la position basculée vers le bas le dispositif de protection anti-éblouissement (100, 112) couvrant la vue d'un occupant du véhicule sur une partie d'une vitre de ce véhicule,
- le dispositif de protection anti-éblouissement (100, 112) comprenant une surface formant écran anti-éblouissement (102),
- la surface formant écran anti-éblouissement (102) présentant une courbure, et
- dans la position basculée vers le bas du dispositif de protection anti-éblouissement (100, 112), la courbure est convexe par rapport à la vitre du véhicule.

19. Dispositif de protection anti-éblouissement (100, 112) conforme à l'une des revendications précédentes, susceptible d'être monté mobile dans l'habitacle d'un véhicule de sorte qu'il puisse être positionné dans une position basculée vers le bas et dans une position basculée vers le haut, dans la position basculée vers le bas le dispositif de protection anti-éblouissement (100, 112) couvrant la vue d'un occupant du véhicule sur une partie du pare-brise de celui-ci, le dispositif de protection anti-éblouissement (100, 112) comprenant :
- une première surface formant écran (102) qui comporte une surface perméable à la lumière (112) dont la perméabilité à la lumière peut être modifiée, et
- une surface formant écran non transparente (171) qui est montée mobile et, qui est susceptible, dans une première position de recouvrir au moins partiellement la première surface formant écran (102) et dans une seconde position de recouvrir une vitre latérale du véhicule lorsque le dispositif de protection anti-éblouissement (100, 112) est dans la position basculée vers le bas.
